# EUROPÄISCHE PATENTSCHRIFT

(11) **EP 4 440 888 B1**
(45) Veröffentlichungstag und Bekanntmachung des Hinweises auf die Patenterteilung: **10.09.2025**
(21) Anmeldenummer: 22805904.4
(22) Anmeldetag: 02.11.2022
(51) Int. Cl.: B60T 13/66, B60T 8/32, B60T 8/88, B60T 8/92, B60T 13/68, B60T 17/18, B60T 17/22

(54) **REDUNDANZVENTILANORDNUNG UND BREMSSYSTEM MIT EINER DRUCKEINSTEUERUNG ÜBER REDUNDANT AUSGEBILDETE ABS VENTILE**
REDUNDANCY VALVE ASSEMBLY AND BRAKE SYSTEM COMPRISING PRESSURE MODULATION VIA REDUNDANTLY FORMED ABS VALVES
ENSEMBLE SOUPAPE REDONDANTE ET SYSTÈME DE FREIN COMPRENANT UNE MODULATION DE PRESSION PAR L'INTERMÉDIAIRE DE SOUPAPES ABS FORMÉES DE MANIÈRE REDONDANTE

(30) Priorität: 30.11.2021 DE 102021131328
(43) Veröffentlichungstag der Anmeldung: 09.10.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/080474
(87) Internationale Veröffentlichungsnummer: WO 2023/099103

(56) Entgegenhaltungen:
- WO-A1-2018/172256
- WO-A1-2018/172268
- DE-A1- 102018 108 092
- DE-U1- 202019 106 870

## Beschreibung

Die Erfindung betrifft eine Redundanzventilanordnung zur redundanten Einspeisung eines redundanten Bremsdrucks in einen Betriebsbremsdruckpfad eines elektronisch steuerbaren pneumatischen Bremssystems für ein Fahrzeug, vorzugsweise Nutzfahrzeug, ein elektronisch steuerbares pneumatisches Bremssystem für ein Fahrzeug, vorzugsweise Nutzfahrzeug, mit einer Betriebs-Steuereinheit zum Steuern des elektronisch steuerbaren pneumatischen Bremssystems in einem Betriebsfall, wenigstens einem Betriebs-Achsmodulator, der mit der Betriebs-Steuereinheit verbunden ist und von dieser Betriebs-Bremssignale empfängt und basierend hierauf einen Betriebsbremsdruck für eine erste Achse aussteuert und einer Redundanz-Steuereinheit zum Steuern des elektronisch steuerbaren pneumatischen Bremssystems in einem Redundanzfall. Weiterhin betrifft die Erfindung auch ein Fahrzeug, vorzugsweise Nutzfahrzeug, umfassend wenigstens eine erste Achse und eine zweite Achse sowie ein elektronisch steuerbares pneumatisches Bremssystem. Zudem betrifft die Erfindung ein Verfahren zum Steuern eines elektronisch steuerbaren pneumatischen Bremssystems.

Konzepte zur redundanten Aussteuerung eines Bremsdrucks sollen insbesondere in einem Fehlerfall in einem Bremssystem, der die Aussteuerung eines Betriebsbremsdruck teilweise oder vollständig verhindert, eine redundante Bremsung des Fahrzeugs ermöglichen. Bekannte Konzepte zur redundanten Aussteuerung eines Bremsdrucks nutzen in der Regel teilweise redundante Komponenten und teilweise vorhandene Komponenten, um den Bremsdruck auszusteuern. So ist beispielsweise aus DE 10 2016 005 318 A1 ein System bekannt, bei dem, für den Fall, dass eine zentrale Steuereinheit ausfällt, die anderenfalls einen Vorderachsmodulator elektronisch ansteuern würde, ein Bypassventil pneumatisch einen Redundanzdruck aussteuert, der dann dem Vorderachsmodulator bereitgestellt wird, um auf diese Weise eine redundante pneumatische Aussteuerung des Vorderachsbremsdrucks zu erreichen. Allgemein offenbart DE 10 2016 005 318 A1 ein elektronisch steuerbares pneumatisches Bremssystem mit mindestens zwei Bremskreisen, wobei mindestens einem der mindestens zwei Bremskreise ein elektrisch und pneumatisch steuerbares Steuerventil und einem weiteren der mindestens zwei Bremskreise ein elektrisch steuerbares Parkbremsventil zugeordnet ist, zum Vorgeben von Bremsdrücken zur Ansteuerung von Radbremsen des jeweiligen Bremskreises. Eine erste Steuereinheit ist vorgesehen, die ausgebildet ist, das jeweilige Steuerventil in Abhängigkeit von einer automatisiert angeforderten Fahrzeug-Soll-Verzögerung oder einer vom Fahrer vorgegebenen Betätigung über ein Bremspedal elektrisch auszusteuern. Ferner ist eine zweite Steuereinheit vorgesehen, die dazu ausgebildet ist, das Parkbremsventil in Abhängigkeit von der automatisiert angeforderten Fahrzeug-Soll-Verzögerung elektrisch zu steuern, wenn eine elektrische Ansteuerung des jeweiligen Steuerventils verhindert ist zum Ausbilden einer elektronisch pneumatisch gesteuerten Redundanz. Weiterhin ist ein einem der Steuerventile zugeordnetes Bypassventil vorgesehen, das ausgebildet ist, das zugeordnete Steuerventil pneumatisch anzusteuern, wobei die pneumatische Ansteuerung in Abhängigkeit von der automatisiert angeforderten Fahrzeug-Soll-Verzögerung oder in Abhängigkeit von der von dem Fahrer vorgenommenen Betätigung des Bremspedals erfolgt, wenn eine elektrische Ansteuerung des jeweiligen Steuerventils verhindert ist.

Eine solche Gestaltung erfordert allerdings, dass der entsprechende Redundanzanschluss des Steuerventils, nämlich des Vorderachsmodulators oder Hinterachsmodulators, funktionsfähig ist. Dadurch ist eine solche Lösung abhängig davon, dass eine Hauptaktuatorik des Steuerventils, nämlich Vorderachsmodulator oder Hinterachsmodulator, funktionsfähig ist.

### Austauschseite 2a (einzufügen auf Seite 2 nach dem letzten Absatz)

Die WO2018172256A1 offenbart ein elektronisch steuerbares Bremssystem mit einem Anhänger-Steuerventil, das ein Anhänger-Steuermodul aufweist, wobei das Anhänger-Steuermodul ausgebildet ist, eine elektronisch übermittelte Bremsvorgabe aufzunehmen und zu verarbeiten, und das Anhänger-Steuerventil ausgebildet ist, gesteuert von dem Anhänger-Steuermodul einen Redundanz-Steuerdruck in Abhängigkeit der elektronisch übermittelten Bremsvorgabe zu erzeugen und auszugeben, wobei, falls ein durch ein Betriebsbrems-Steuermodul elektrisch gesteuertes Umsetzen der Bremsvorgabe über mindestens einen Betriebsbremskreis durch Aussteuern eines Betriebsbrems-Bremsdruckes verhindert ist, wobei der Betriebsbrems-Bremsdruck in Abhängigkeit des in dem Anhänger-Steuerventil erzeugten Redundanz-Steuerdruckes erzeugt und an die Betriebsbremsen des mindestens einen Betriebsbremskreises ausgesteuert werden kann zum redundanten Umsetzen der Bremsvorgabe im Fahrzeug, und/oder wobei ein Anhänger-Steuerdruck in Abhängigkeit des in dem Anhänger-Steuerventil erzeugten Redundanz-Steuerdruckes erzeugt und an einen Anhänger ausgegeben werden kann zum redundanten Umsetzen der Bremsvorgabe in dem Anhänger.

Die DE102018108092A1 betrifft einen elektropneumatischer Zweikanalachsmodulator für Nutzfahrzeuge, wobei der Zweikanalachsmodulator einen ersten Vorratsanschluss zum Anschließen eines ersten Druckluftvorrats und einen zweiten Vorratsanschluss zum Anschließen eines zweiten Druckluftvorrats, einen Vorderachskanalanschluss, einen Hinterachskanalanschluss, eine elektropneumatische Vorderachsventilanordnung, die mit dem ersten Vorratsanschluss zum Aussteuern eines Vorderachsbremsdrucks an dem Vorderachskanalanschluss verbunden ist und eine elektropneumatische Hinterachsventilanordnung, die mit dem zweiten Vorratsanschluss zum Aussteuern eines Hinterachsbremsdrucks an dem Hinterachskanalanschluss verbunden ist, auf weist. Weiter ist eine erste Redundanzventilanordnung vorgesehen, die mit dem zweiten Vorratsanschluss zum Aussteuern eines redundanten Vorderachsbremsdrucks an dem Vorderachskanalanschluss verbunden ist.

### Austauschseite 2b (einzufügen nach der Austauschseite 2a)

Die DE202019106870U1 beschreibt Nutzfahrzeug-Bremssystem mit einem ersten elektronisch gesteuerten Bremsdruckventil, über welches der pneumatische Bremsdruck an einem ersten pneumatischen Bremsaktuator eines ersten Fahrzeugrades vorgebbar ist, und einem ersten Umschaltventil, welches zwischen dem ersten Bremsdruckventil und dem ersten Bremsaktuator angeordnet ist und eine erste Betriebsstellung aufweist, in der das erste Umschaltventil eine Verbindung des ersten Bremsaktuators mit einer ersten Redundanzleitung absperrt, und eine zweite Betriebsstellung aufweist, in der das erste Umschaltventil den ersten Bremsaktuator mit der ersten Redundanzleitung verbindet, wobei der Druck in der ersten Redundanzleitung durch ein elektronisch gesteuertes Redundanzventil steuerbar ist, welches den pneumatischen Bremsdruck an dem ersten pneumatischen Bremsaktuator steuert, wenn sich das erste Umschaltventil in der zweiten Betriebsstellung befindet.

Daneben gibt es andere Ansätze, die ein vollständig redundantes Bremssystem aufbauen, wie insbesondere in DE 10 2019 106 591 A1 offenbart. Gemäß der dortigen Lehre sind alle relevanten Systemelemente aufgedoppelt und so ein vollständig redundantes Bremssystem aufgebaut. Die Bremssysteme werden dann über Select-High-Ventile an den Bremsaktuatoren zusammengeführt. Bei dieser Lösung besteht aber der strömungstechnische Nachteil, dass auch das Primärsystem den Bremsdruck nur über die Select-High-Ventile an den Bremsaktuatoren aussteuern kann und somit nicht unmittelbar. Zudem ergibt sich durch die vollständige Aufdoppelung der einzelnen Bauelemente auch ein erhöhter Bauraumbedarf.

Aufgabe der vorliegenden Erfindung ist es daher, die im Grunde gut funktionierenden bestehenden Systeme weiter zu verbessern und eine hohe Verfügbarkeit bei gleichzeitig strömungstechnisch vorteilhaften Lösungen, die weniger oder keine Rückwirkung auf das Primärsystem haben.

Die Aufgabe wird in einem ersten Aspekt der Erfindung bei einer Redundanzventilanordnung der eingangs genannten Art dadurch gelöst, dass diese aufweist: einen Betriebsbremsdruckanschluss zum Empfangen eines Betriebsbremsdrucks von einem Betriebsbremsdruckmodulator, einen Redundanzbremsdruckanschluss zum Empfangen eines Redundanzbremsdrucks von einem Redundanzbremsdruckmodulator und einen Bremsaktuatoranschluss zum Anschließen wenigstens eines Bremsaktuators, wobei die Redundanzventilanordnung elektrisch ansteuerbar ist, um wahlweise den Betriebsbremsdruck oder den Redundanzbremsdruck an dem Bremsaktuatoranschluss auszusteuern.

Anders als im Stand der Technik bekannt, bei dem zur Einkopplung eines Redundanzbremsdrucks in einem Betriebsbremsdruckpfad beispielsweise unmittelbar am Bremsaktuator, ein oder mehrere Select-High-Ventile oder andere Art neuer Wechselventile eingesetzt werden, die rein mechanisch, insbesondere den jeweils höheren von zwei Drücken, die an zwei verschiedenen Anschlüssen anliegen, durchsteuern, nutzt die Erfindung die Redundanzventilanordnung, die elektrisch ansteuerbar ist, um wahlweise den Betriebsbremsdruck oder den Redundanzbremsdruck an den Bremsdruckaktuatoranschluss auszusteuern. Dabei ist vorgesehen, dass der Betriebsbremsdruck und der Redundanzbremsdruck an zwei verschiedenen Anschlüssen der Redundanzventilanordnung bereitgestellt werden und somit insbesondere unabhängig voneinander sind. Der Betriebsbremsdruck wird von einem Betriebsbremsdruckmodulator bereitgestellt und der Redundanzbremsdruck wird von einem Redundanzbremsdruckmodulator bereitgestellt. Die Aussteuerung des Redundanzbremsdrucks mittels der Redundanzventilanordnung an dem Bremsaktuatoranschluss ist somit nicht abhängig davon, dass eine Hauptaktuatorik des Betriebsbremsdruckmodulators funktionsfähig ist. Vielmehr reicht es aus, wenn der Redundanzbremsdruckmodulator und die Redundanzventilanordnung funktionsfähig sind. Eine elektrisch ansteuerbare Redundanzventilanordnung erlaubt es zudem, auch wahlweise unabhängig von einem etwaigen Fehlerfall den Betriebsbremsdruck oder den Redundanzbremsdruck an dem Bremsaktuatoranschluss auszusteuern. Das heißt, auch in Fällen, in denen kein Fehler im Fahrzeug vorliegt, kann der Redundanzbremsdruck an einem Bremsdruckaktuatoranschluss ausgesteuert werden, beispielsweise um die Funktionsfähigkeit zu testen, die Gangbarkeit von Ventilen sicherzustellen, Lebensdauer von Komponenten zu erhöhen, Verschleiß auszugleichen oder andere, die Effizienz, wie beispielsweise Luftverbrauch, positiv beeinflussende Maßnahmen, umzusetzen.

Erfindungsgemäß weist die Redundanzventilanordnung eine Magnetventileinheit auf, die wenigstens mit dem Betriebsbremsdruckanschluss und dem Redundanzbremsdruckanschluss verbunden ist, und durch wenigstens ein erstes Schaltsignal schaltbar ist, wobei in Abhängigkeit vom wenigstens ersten Schaltsignal der Betriebsbremsdruck oder der Redundanzbremsdruck an dem Bremsaktuatoranschluss ausgesteuert wird. Die Magnetventileinheit kann vorzugsweise ein oder mehrere elektromagnetisch schaltbare Ventile aufweisen, wie vorzugsweise monostabile oder bistabile Ventile.

Gemäß der Erfindung weist die Magnetventileinheit ein elektromagnetisches Betriebs-Vorsteuerventil und ein elektromagnetisches Redundanz-Vorsteuerventil auf, wobei das Betriebs-Vorsteuerventil durch das erste Schaltsignal schaltbar ist und einen ersten Vorsteuerdruck bereitstellt, und das Redundanz-Vorsteuerventil durch ein zweites Schaltsignal schaltbar ist und einen zweiten Vorsteuerdruck bereitstellt. Auf Basis des ersten und zweiten Vorsteuerdrucks können dann in der Folge ein oder mehrere Hauptventile geschaltet werden, um jeweils entweder die Durchsteuerung des Betriebsbremsdrucks oder des Redundanzbremsdrucks zum Bremsaktuatoranschluss zu ermöglichen.

Vorzugsweise weist das Betriebs-Vorsteuerventil einen mit dem Betriebsbremsdruckanschluss verbundenen ersten Betriebs-Vorsteuerventilanschluss, einen mit dem Redundanzbremsdruckanschluss verbundenen zweiten Betriebs-Vorsteuerventilanschluss und einen den ersten Vorsteuerdruck aussteuernden dritten Betriebs-Vorsteuerventilanschluss auf. Das Betriebs-Vorsteuerventil verbindet in Abhängigkeit von dem ersten Schaltsignal entweder den ersten Betriebs-Vorsteuerventilanschluss oder den zweiten Betriebs-Vorsteuerventilanschluss mit dem dritten Betriebs-Vorsteuerventilanschluss. Vorzugsweise verbindet das erste Betriebs-Vorsteuerventil in einer ersten Schaltstellung den zweiten Betriebs-Vorsteuerventilanschluss mit dem dritten Betriebs-Vorsteuerventilanschluss und in einer zweiten Schaltstellung verbindet das erste Betriebs-Vorsteuerventil den ersten Betriebs-Vorsteuerventilanschluss mit dem dritten Betriebs-Vorsteuerventilanschluss. Vorzugsweise ist das erste Betriebs-Vorsteuerventil stromlos in der ersten Schaltstellung.

Das Redundanz-Vorsteuerventil ist vorzugsweise analog zum Betriebs-Vorsteuerventil aufgebaut. Das Redundanz-Vorsteuerventil weist vorzugsweise ein mit dem Redundanzdruckanschluss verbundenen ersten Redundanz-Vorsteuerventilanschluss, einen mit dem Betriebsbremsdruckanschluss verbundenen zweiten Redundanz-Vorsteuerventilanschluss und einen den zweiten Vorsteuerdruck aussteuernden dritten Redundanz-Vorsteuerventilanschluss auf. Das Redundanz-Vorsteuerventil verbindet vorzugsweise in Abhängigkeit von dem zweiten Schaltsignal entweder den ersten Redundanz-Vorsteuerventilanschluss oder den zweiten Redundanz-Vorsteuerventilanschluss mit dem dritten Redundanz-Vorsteuerventilanschluss.

Vorzugsweise verbindet das Redundanz-Vorsteuerventil in einer ersten Schaltstellung den zweiten Redundanz-Vorsteuerventilanschluss mit dem dritten Redundanz-Vorsteuerventilanschluss und in einer zweiten Schaltstellung den ersten Redundanz-Vorsteuerventilanschluss mit dem dritten Redundanz-Vorsteuerventilanschluss. Vorzugsweise ist das Redundanz-Vorsteuerventil stromlos in der ersten Schaltstellung und wird durch Bereitstellen des zweiten Schaltsignals in die zweite Schaltstellung verbracht. Der erste bzw. zweite Vorsteuerdruck kann in einer Variante unmittelbar als Volumendruck an den Bremsaktuatoranschluss ausgesteuert werden. Insofern kann vorgesehen sein, dass das Betriebs-Vorsteuerventil und das Redundanz-Vorsteuerventil letztlich den Betriebsbremsdruckanschluss bzw. Redundanzbremsdruckanschluss direkt mit dem Bremsaktuatoranschluss verbinden, und so den Betriebsbremsdruck bzw. Redundanzbremsdruck durchsteuern. Der erste Vorsteuerdruck entspricht dann vorzugsweise dem Betriebsbremsdruck und der zweite Vorsteuerdruck entspricht vorzugsweise dem Redundanzbremsdruck.

In einer bevorzugten Ausführungsform kann aber auch vorgesehen sein, dass die Redundanzventilanordnung eine Hauptventileinheit aufweist, die mit dem Betriebsbremsdruckanschluss, dem Redundanzbremsdruckanschluss und dem Bremsaktuatoranschluss zum wahlweisen Aussperren des Betriebsbremsdrucks oder des Redundanzbremsdrucks verbunden ist. Das heißt, die Hauptventileinheit ist vorzugsweise in einer normal offenen Schaltstellung, sodass im unbetätigten Zustand der Hauptventileinheit der Betriebsbremsdruck bzw. Redundanzbremsdruck von den jeweiligen Betriebsbremsdruckanschlüssen und Redundanzbremsdruckanschluss durch die Hauptventileinheit durchgesteuert und an dem Bremsaktuatoranschluss ausgesteuert werden kann. Die Hauptventileinheit kann dann geschaltet werden, um entweder den Betriebsbremsdruck zum Bremsaktuatoranschluss durchzusteuern oder den Redundanzbremsdruck zum Bremsaktuatoranschluss durchzusteuern. Im betätigten Zustand ist vorzugsweise wenigstens einer dieser beiden Drücke ausgesperrt.

Die Hauptventileinheit weist vorzugsweise ein Betriebs-Hauptventil auf, welches einen mit dem Betriebsbremsdruckanschluss verbundenen ersten Betriebs-Hauptventilanschluss und einen mit dem Bremsaktuatoranschluss verbundenen zweiten Betriebs-Hauptventilanschluss aufweist. Vorzugsweise trennt das Betriebs-Hauptventil in einer Sperrstellung den ersten Betriebs-Hauptventilanschluss und den zweiten Betriebs-Hauptventilanschluss und verbindet in einer Durchlassstellung den ersten Betriebs-Hauptventilanschluss und den zweiten Betriebs-Hauptventilanschluss druckfluidisch. Vorzugsweise weist die Hauptventileinheit auch ein Redundanzhauptventil auf, welches einen mit dem Redundanzbremsdruckanschluss verbundenen ersten Redundanz-Hauptventilanschluss und einen mit dem Bremsaktuatoranschluss verbundenen zweiten Redundanz-Hauptventilanschluss aufweist, wobei das Redundanz-Hauptventil vorzugsweise in einer Sperrstellung den ersten Redundanz-Hauptventilanschluss und den zweiten Redundanz-Hauptventilanschluss trennt und in einer Durchlassstellung den ersten Redundanz-Hauptventilanschluss und den zweiten Redundanz-Hauptventilanschluss druckfluidisch miteinander verbindet. Das Betriebs-Hauptventil und das Redundanz-Hauptventil können identisch oder verschieden ausgebildet sein, in einer oder zwei Baueinheiten, dargestellt sein.

Bevorzugt ist das Betriebs-Hauptventil pneumatisch schaltbar. Zu diesem Zweck weist das Betriebs-Hauptventil vorzugsweise einen Betriebs-Steueranschluss auf, der zum Empfangen des ersten Vorsteuerdrucks mit der Magnetventileinheit verbunden ist, wobei das Betriebs-Hauptventil in die Sperrstellung federbelastet vorgespannt ist. Es kann vorgesehen sein, dass das Betriebs-Hauptventil dann von der Sperrstellung in die Freigabestellung schaltet, wenn der erste Vorsteuerdruck einen bestimmten ersten Schwellwert überschreitet. Auch kann vorgesehen sein, dass das Betriebshauptventil von der Freigabe- in die Schließstellung schaltet, wenn der erste Vorsteuerdruck einen zweiten Schwellwert überschreitet. Um eine betriebssichere Rückfallebene zu bilden, sollte das Betriebshauptventil so ausgebildet sein, dass es dann in einer Freigabestellung ist, wenn gerade kein erster Vorsteuerdruck ausgesteuert wird, aber der Betriebsbremsdruck an dem Betriebsbremsdruckanschluss anliegt. Denn auf diese Weise kann durch aktives Schalten der Magnetventileinheit der erste Vorsteuerdruck ausgesteuert werden und auf diese Weise aktiv der Betriebsbremsdruck ausgesperrt werden. Im Normalbetrieb sollte aber das Betriebshauptventil in einer Freigabestellung sein, sodass in einem Normalbetrieb der Betriebsbremsdruck durchgesteuert und am Bremsaktuatoranschluss bereitgestellt werden kann.

Ähnliches gilt für das Redundanz-Hauptventil. Auch dieses ist vorzugsweise pneumatisch schaltbar und weist vorzugsweise einen Redundanz-Steueranschluss auf. Der Redundanz-Steueranschluss ist zum Empfangen des zweiten Vorsteuerdrucks vorzugsweise mit der Magnetventileinheit verbunden, wie insbesondere dem Redundanz-Vorsteuerventil. Vorzugsweise ist das Redundanz-Hauptventil in die Sperrstellung federbelastet vorgespannt. Im Normalbetrieb sollte der Redundanzbremsdruck ausgesperrt werden, sodass nur der Betriebsbremsdruck von dem Betriebsbremsdruckanschluss zum Bremsaktuatoranschluss durchgesteuert werden kann. Erst, wenn der Betriebsbremsdruck aufgrund eines Fehlers nicht oder nicht richtig bereitgestellt werden kann, sollte der Betriebsbremsdruckanschluss geschlossen werden und der Redundanzbremsdruck sollte durchgesteuert werden und an dem Bremsaktuatoranschluss bereitgestellt werden.

In einer bevorzugten Weiterbildung werden sowohl das erste Schaltsignal als auch das zweite Schaltsignal von einer Redundanz-Steuereinheit bereitgestellt. Hierdurch wird der Aspekt der betriebssicheren Rückfallebene weitergebildet. Für den Fall, dass in einer Betriebsebene ein Fehler auftritt, kann möglicherweise eine Betriebsebene das erste Schaltsignal bzw. das zweite Schaltsignal nicht oder nicht mehr richtig bereitstellen. Wenn eine Redundanzebene dann die Steuerung übernehmen soll, kann dadurch, dass eine Redundanz-Steuereinheit die Schaltsignale bereitstellt in für den Betrieb richtiger Weise der Betriebsbremsdruck ausgesperrt und der Redundanzbremsdruck durchgesteuert und am Bremsaktuatoranschluss bereitgestellt werden.

In einer weiteren bevorzugten Ausführungsform ist dem Betriebsbremsdruckanschluss ein ABS-Ventil vorgeschaltet, sodass dem Betriebsbremsdruckanschluss ein ABS-modulierter Betriebsbremsdruck bereitgestellt wird. Als ein ABS-Ventil kann hier ein herkömmliches ABS-Ventil vorgesehen sein, das abhängig von Signalen eines oder mehrerer Raddrehzahlsensoren den Betriebsbremsdruck verringert. Ein ABS-modulierter Betriebsbremsdruck ist in dem Fall ein Betriebsbremsdruck, der nach dieser Maßgabe durch ein ABS-Ventil zeitweise verringert wird, um ein Blockieren eines Rades zu verhindern. Indem an dem Betriebsbremsdruckanschluss bereits ein ABS-modulierter Betriebsbremsdruck bereitgestellt wird, nämlich insbesondere dadurch, dass dem Betriebsbremsaktuator, der den Betriebsbremsdruck an dem Betriebsbremsdruckanschluss aussteuert, ein ABS-Ventil nachgeschaltet oder in diesen integriert ist, kann der Betriebsbremsdruck, der am Betriebsbremsdruckanschluss ausgesteuert wird, durch die Redundanzventilanordnung durchgesteuert und an dem Bremsaktuatoranschluss ausgesteuert werden und von diesem unmittelbar an dem Bremsaktuator bereitgestellt werden, bei gleichzeitiger Verhinderung eines Bremsblockierens.

Auch dem Redundanzbremsdruckanschluss kann ein ABS-Ventil vorgeschaltet sein, um auch den Redundanzbremsdruck ABS-moduliert bereitzustellen.

Zusätzlich oder alternativ kann auch die Redundanzventilanordnung insgesamt als ABS-Ventil ausgebildet und dazu vorgesehen sein, den am Betriebsbremsdruckanschluss empfangenen Betriebsbremsdruck ABS-moduliert an dem Bremsaktuatoranschluss auszusteuern. Zu diesem Zweck kann die Redundanzventilanordnung den am Betriebsbremsdruckanschluss empfangenen Betriebsbremsdruck in Abhängigkeit von einem oder mehreren Signalen von einem oder mehreren Raddrehzahlsensoren zeitweise absenken, um so ein Bremsblockieren von einem Rad zu verhindern. Die Redundanzventilanordnung kann dazu ein oder mehrere Entlüftungsventile aufweisen, die das zeitweise Reduzieren des Betriebsbremsdrucks erlauben.

In einer weiteren bevorzugten Ausführungsform umfasst die Redundanzventilanordnung ein Schnellentlüftungsventil zum Entlüften des am Bremsaktuatoranschluss ausgesteuerten Drucks. Der am Bremsaktuatoranschluss ausgesteuerte Druck kann der Betriebsbremsdruck, der Redundanzbremsdruck oder ein von diesen abgeleiteter Druck sein. Der am Bremsaktuatoranschluss ausgesteuerte Druck wird vorzugsweise unmittelbar dem Bremsaktuator bereitgestellt. Indem die Redundanzventilanordnung ein Schnellentlüftungsventil aufweist, das dazu geeignet ist, den am Bremsaktuatoranschluss ausgesteuerten Druck zu entlüften, kann einerseits eine rasche Entlüftung des Bremsaktuators und damit ein schnelles Lösen der Bremse ermöglicht werden, andererseits kann über das Schnellentlüftungsventil auch eine ABS-Regelung zum nur kurzfristigen und zeitweisen Reduzieren des am Bremsaktuatoranschluss ausgesteuerten Drucks erreicht werden.

Vorzugsweise ist das Schnellentlüftungsventil derart mit dem Redundanzbremsdruckanschluss verbunden, dass über das Schnellentlüftungsventil wahlweise der Redundanzbremsdruck aussteuerbar und der Bremsaktuatoranschluss entlüftbar ist. Das Schnellentlüftungsventil bildet also einen Entlüftungspfad für den Bremsaktuatoranschluss, lässt aber über diesen Entlüftungspfad des Bremsaktuatoranschlusses die Einsteuerung des Redundanzbremsdrucks zu. Der Belüftungspfad des Bremsaktuatoranschlusses ist dann vorzugsweise mit dem Betriebsbremsdruckanschluss in Verbindung bringbar oder druckfluidisch verbindbar. Der Redundanzbremsdruck kann also über den Entlüftungspfad des Schnellentlüftungsventils eingesteuert werden, um auf diese Weise an dem Bremsaktuatoranschluss bereitgestellt werden zu können.

Zu diesem Zweck kam das Schnellentlüftungsventil einen mit dem Redundanzbremsdruckanschluss verbundenen ersten Schnellentlüftungsventilanschluss, einen mit der Hauptventileinheit verbundenen zweiten Schnellentlüftungsventilanschluss und einen mit einer Entlüftung verbundenen dritten Schnellentlüftungsventilanschluss aufweisen.

In einer weiteren bevorzugten Ausführungsform ist vorgesehen, dass das Betriebs-Vorsteuerventil durch ein drittes Schaltsignal und das Redundanz-Vorsteuerventil durch ein viertes Schaltsignal schaltbar ist, die von einer Betriebs-Steuereinheit bereitgestellt werden. In dieser Ausführungsform sind das Betriebs-Vorsteuerventil und das Redundanz-Vorsteuerventil vorzugsweise Y-verkabelt und zwar sowohl mit der Redundanz-Steuereinheit als auch mit der Betriebs-Steuereinheit. Das heißt, sowohl das Betriebs-Vorsteuerventil als auch das Redundanz-Vorsteuerventil können unabhängig voneinander sowohl durch die Redundanz-Steuereinheit als auch durch die Betriebs-Steuereinheit geschaltet werden. In Bezug auf das Betriebs-Vorsteuerventil und das Redundanz-Vorsteuerventil können sich die Betriebs-Steuereinheit und die Redundanz-Steuereinheit vollständig ersetzen, sodass die Funktionsumfänge vergrößert sind.

In einer Variante kann dazu das Betriebs-Vorsteuerventil einen ersten Elektromagneten aufweisen, an welchem sowohl das erste Schaltsignal als auch das dritte Schaltsignal bereitgestellt werden können. Vorzugsweise weist das Redundanz-Vorsteuerventil einen zweiten Elektromagneten auf, an welchem sowohl das zweite Schaltsignal als auch das vierte Schaltsignal bereitgestellt werden können. Die ersten, zweiten, dritten und vierten Schaltsignale werden also jeweils an denselben Elektromagneten ausgesteuert und können beide auf diesen einwirken.

Alternativ dazu kann auch vorgesehen sein, dass das Betriebs-Vorsteuerventil einen ersten Elektromagneten aufweist, an welchem das erste Schaltsignal bereitgestellt werden kann und einen dritten Elektromagneten aufweist, an welchem das dritte Schaltsignal bereitgestellt werden kann. Vorzugsweise umfasst das Redundanz-Vorsteuerventil analog dazu einen zweiten Elektromagneten, an welchem das zweite Schaltsignal bereitgestellt werden kann sowie einen vierten Elektromagneten, an welchem das vierte Schaltsignal bereitgestellt werden kann. Jedem Elektromagneten ist hier ein eigenes Schaltsignal zugeordnet, und anders als in dem zuvor beschriebenen Beispiel wird nicht ein einzelner Elektromagnet mit zwei Schaltsignalen angesteuert. Auf diese Weise kann eine bessere Funktionstrennung erreicht werden.

In einer weiteren bevorzugten Ausgestaltung der Erfindung weist die Magnetventileinheit ein elektromagnetisches Einlass-Vorsteuerventil und ein elektromagnetisches Auslass-Vorsteuerventil auf, wobei das Einlass-Vorsteuerventil durch ein Einlassschaltsignal schaltbar ist und einen dritten Vorsteuerdruck bereitstellt und das Auslass-Vorsteuerventil durch ein Auslassschaltsignal schaltbar ist und einen vierten Vorsteuerdruck bereitstellt. Vorzugsweise werden das Einlassschaltsignal und das Auslassschaltsignal von einer Betriebssteuereinheit bereitgestellt. Das erste Schaltsignal und das zweite Schaltsignal können weiterhin von der Redundanz-Steuereinheit bereitgestellt werden. Insofern ist eine Redundanzventilanordnung geschaffen, die separate Ventile für die Betriebsebene und die Redundanzebene aufweist, nämlich das Betriebs-Vorsteuerventil und das Redundanz-Vorsteuerventil für die Redundanzebene und das Einlass-Vorsteuerventil und das Auslass-Vorsteuerventil für die Betriebsebene.

Hierbei ist bevorzugt, dass das Einlass-Vorsteuerventil einen mit dem Betriebsbremsdruckanschluss verbundenen ersten Einlass-Vorsteuerventilanschluss, einen mit einer Entlüftung verbundenen zweiten Einlass-Vorsteuerventilanschluss und einen den dritten Vorsteuerdruck aussteuernden dritten Einlass-Vorsteuerventilanschluss aufweist. Das Einlass-Vorsteuerventil verbindet vorzugsweise in Abhängigkeit von dem Einlass-Schaltsignal entweder den ersten Einlass-Vorsteuerventilanschluss oder den zweiten Einlass-Vorsteuerventilanschluss mit dem dritten Einlass-Vorsteuerventilanschluss. Vorzugsweise verbindet das Einlass-Vorsteuerventil in einer ersten Schaltstellung den zweiten Einlass-Vorsteuerventilanschluss mit dem dritten Einlass-Vorsteuerventilanschluss, und in einer zweiten Schaltstellung den ersten Einlass-Vorsteuerventilanschluss mit dem dritten Einlass-Vorsteuerventilanschluss. Vorzugsweise ist das Einlass-Vorsteuerventil stromlos in der ersten Schaltstellung und schaltet bei Bereitstellen des Einlass-Schaltsignals in die zweite Schaltstellung.

Weiterhin weist das Auslass-Vorsteuerventil vorzugsweise einen mit einer oder der Entlüftung verbundenen ersten Auslass-Vorsteuerventilanschluss, einen mit dem Betriebsbremsdruckanschluss verbundenen zweiten Auslass-Vorsteuerventilanschluss und einen den vierten Vorsteuerdruck aussteuernden dritten Auslass-Vorsteuerventilanschluss auf. Das Auslass-Vorsteuerventil verbindet vorzugsweise in Abhängigkeit von dem Auslass-Schaltsignal entweder den ersten Auslass-Vorsteuerventilanschluss oder den zweiten Auslass-Vorsteuerventilanschluss mit dem dritten Auslass-Vorsteuerventilanschluss. Vorzugsweise verbindet das Auslass-Vorsteuerventil in einer ersten Schaltstellung den zweiten Auslass-Vorsteuerventilanschluss mit dem dritten Auslass-Vorsteuerventilanschluss, und in einer zweiten Schaltstellung den ersten Auslass-Vorsteuerventilanschluss mit dem dritten Auslass-Vorsteuerventilanschluss. Vorzugsweise ist das Auslass-Vorsteuerventil stromlos in der ersten Schaltstellung und schaltet bei Bereitstellen des Auslass-Schaltsignals in die zweite Schaltstellung.

Mit Vorteil ist insbesondere bei Ausführungsformen mit Einlass- und Auslass-Vorsteuerventilen weiterhin vorgesehen, dass das Betriebs-Vorsteuerventil einen mit dem Betriebsbremsdruckanschluss verbundenen ersten Betriebs-Vorsteuerventilanschluss, einen mit einer oder der Entlüftung verbundenen zweiten Betriebs-Vorsteuerventilanschluss und einen den ersten Vorsteuerdruck aussteuernden dritten Betriebs-Vorsteuerventilanschluss aufweist, wobei das Betriebs-Vorsteuerventil in Abhängigkeit von dem ersten Schaltsignal entweder den ersten Betriebs-Vorsteuerventilanschluss oder den zweiten Betriebs-Vorsteuerventilanschluss mit dem dritten Betriebs-Vorsteuerventilanschluss verbindet. Vorzugsweise weist das Redundanz-Vorsteuerventil einen mit einer oder der Entlüftung verbundenen ersten Redundanz-Vorsteuerventilanschluss, einen mit dem Betriebsbremsdruckanschluss verbundenen zweiten Redundanz-Vorsteuerventilanschluss und einen den zweiten Vorsteuerdruck aussteuernden dritten Redundanz-Vorsteuerventilanschluss auf, wobei das Redundanz-Vorsteuerventil in Abhängigkeit von dem zweiten Schaltsignal entweder den ersten Redundanz-Vorsteuerventilanschluss oder den zweiten Redundanz-Vorsteuerventilanschluss mit dem dritten Redundanz-Vorsteuerventilanschluss verbindet.

Bei derartigen Ausführungsformen ist vorzugsweise ferner vorgesehen, dass der erste Vorsteuerdruck und der dritte Vorsteuerdruck über ein erstes Wechselventil an der Hauptventileinheit ausgesteuert werden können, und/oder der zweite Vorsteuerdruck und der vierte Vorsteuerdruck über ein zweites Wechselventil an der Hauptventileinheit ausgesteuert werden können. Auf diese Weise können der von dem Betriebs-Vorsteuerventil und dem Einlass-Vorsteuerventil ausgesteuerte Vorsteuerdruck zusammengefasst und wechselweise an der Hauptventileinheit bereitgestellt werden, insbesondere und vorzugsweise an dem Betriebs-Hauptventil. Ebenso kann die von dem Redundanz-Vorsteuerventil und Auslass-Vorsteuerventil ausgesteuerten Vorsteuerdrücke zusammengefasst und wechselweise über das zweite Wechselventil an der Hauptventileinheit ausgesteuert werden, nämlich insbesondere an dem Redundanz-Hauptventil der Hauptventileinheit. Da die ersten und zweiten Wechselventile in dieser Ausführungsform nur dazu verwendet werden, die Hauptventile zu aktivieren und so grundsätzlich zwischen dem Betriebs- und Redundanz-Modus zu schalten, leiden die Performance und die Dynamik des Systems nicht. Um die Gangbarkeit der Wechselventile zu gewährleisten oder auch nur testen zu können, ist es möglich, zwischen den verschiedenen Modi aktiv durch Bereitstellen der entsprechenden Schaltsignale zu schalten.

In einer weiteren bevorzugten Ausführungsform weist die Redundanzventilanordnung einen Drucksensor auf zum Erfassen des am Bremsaktuatoranschluss ausgesteuerten Drucks. Auf diese Weise kann verifiziert werden, ob die Hauptventileinheit, bzw. die Vorsteuerventile, der Redundanzventilanordnung ordnungsgemäß funktionieren. Außerdem kann auf diese Weise ein Regelkreis hergestellt werden.

In einem zweiten Aspekt der Erfindung wird die eingangs genannte Aufgabe bei einem elektronisch steuerbaren pneumatischen Bremssystem für ein Fahrzeug, vorzugsweise Nutzfahrzeug, mit einer Betriebssteuereinheit zum Steuern des elektronisch steuerbar pneumatischen Bremssystems in einem Betriebsfall, wenigstens einen Betriebsachsmodulator, der mit der Betriebs-Steuereinheit verbunden ist und von dieser Betriebs-Bremssignale empfängt und basierend hierauf einen Betriebsbremsdruck für eine erste Achse aussteuert, einer Redundanz-Steuereinheit zum Steuern des elektronisch steuerbaren pneumatischen Bremssystems im Redundanzfall und wenigstens einem Redundanzachsmodulator, der mit der Redundanz-Steuereinheit verbunden ist und von dieser Redundanz-Bremssignale empfängt und basierend hierauf einen RedundanzBremsdruck für die erste Achse aussteuert, dadurch gelöst, dass wenigstens eine Redundanzventilanordnung nach einem der vorstehend beschriebenen bevorzugten Ausführungsformen einer Redundanzventilanordnung gemäß dem ersten Aspekt der Erfindung vorgesehen ist. Dabei ist der Betriebsbremsdruckanschluss der Redundanzventilanordnung mit dem Betriebs-Achsmodulator verbunden und empfängt von diesem den Betriebsbremsdruck. Der Redundanzbremsdruckanschluss ist ferner mit dem Redundanz-Achsmodulator verbunden und empfängt von diesem den Redundanzbremsdruck. Der Bremsaktuatoranschluss der Redundanzventilanordnung ist schließlich mit einem ersten Betriebsbremsaktuator an der ersten Achse verbunden.

Es soll verstanden werden, dass die Redundanzventilanordnung gemäß dem ersten Aspekt der Erfindung und das elektronisch steuerbare pneumatische Bremssystem gemäß dem zweiten Aspekt der Erfindung gleiche und ähnliche Unteraspekte aufweisen, wie sie insbesondere in den abhängigen Ansprüchen niedergelegt sind. Insofern wird für bevorzugte Weiterbildungen und deren Vorteile auf die obige Beschreibung zur Redundanzventilanordnung gemäß dem ersten Aspekt der Erfindung vollumfänglich verwiesen.

Vorzugsweise ist die wenigstens eine Redundanzventilanordnung mit der Redundanz-Steuereinheit verbunden und empfängt von dieser das erstes Schaltsignal und das zweite Schaltsignal. Es kann auch vorgesehen sein, dass die Redundanzventilanordnung eine eigene Intelligenz aufweist und insofern von der Redundanz-Steuereinheit ein Anforderungssignal empfängt, welches dann die eigene Intelligenz der Redundanzventilanordnung in das erste und zweite Schaltsignal umsetzt. Ferner ist denkbar und bevorzugt, dass die wenigstens eine Redundanzventilanordnung mit der Redundanz-Steuereinheit zu einem Modul integriert ist.

Weiterhin ist die wenigstens eine Redundanzventilanordnung vorzugsweise mit der Betriebs-Steuereinheit verbunden und empfängt von dieser das dritte und das vierte Schaltsignal. Für den Fall, dass die Redundanzventilanordnung ein Einlass-Vorsteuerventil und ein Auslass-Vorsteuerventil aufweist, empfängt diese von der Betriebs-Steuereinheit vorzugsweise auch das Einlass-Schaltsignal und das Auslass-Schaltsignal. Wiederum kann vorgesehen sein, dass die Redundanzventilanordnung eine eigene Intelligenz aufweist, die diese Signale ermittelt oder mit der Betriebs-Steuereinheit zu einem Modul integriert ist.

In einer weiteren bevorzugten Ausführungsform ist vorgesehen, dass das elektronisch steuerbare pneumatische Bremssystem wenigstens einen ersten Raddrehzahlsensor an der ersten Achse aufweist, welcher sowohl mit der Betriebs-steuereinheit als auch mit der Redundanzsteuereinheit verbunden ist und an diesem ein erstes Raddrehzahlsignal bereitstellt. Bevorzugt werden das erste Schaltsignal und das zweite Schaltsignal und gegebenenfalls auch weitere Schaltsignale für die Redundanz-Ventileinheit basierend auf dem ersten Raddrehzahlsignal erzeugt und bereitgestellt. Sind weitere Raddrehzahlsensoren vorhanden, werden diese ebenfalls mit einbezogen. Auf diese Weise kann die Redundanz-Ventileinheit den Betriebsbremsdruck bzw. Redundanzbremsdruck drehzahlabhängig aussteuern und auf diese Weise eine ABS-Funktionalität umsetzen. Vorzugsweise werden demnach auch das dritte Schaltsignal, das vierte Schaltsignal, das Einlass-Schaltsignal und/oder das Auslass-Schaltsignal von der Betriebs-Steuereinheit basierend auf dem ersten Raddrehzahlsignal erzeugt und bereitgestellt.

In einer bevorzugten Weiterbildung ist die Redundanzventilanordnung an dem ersten Betriebsbremsaktuator angeordnet oder benachbart zu diesem verbaut. Die Redundanzventilanordnung ist vorzugsweise radnah vorgesehen, vorzugsweise ist der erste Betriebsbremsaktuator unmittelbar und ohne weitere Verrohrung oder Verschlauchung mit dem Bremsaktuatoranschluss der Redundanzventilanordnung verbunden. Auf diese Weise kann eine hohe Dynamik erreicht werden und weitere Fehlerquellen können vermieden werden.

Gemäß einer besonders bevorzugten Weiterbildung ist wenigstens eine Redundanzventilanordnung gemäß einer der vorstehend beschriebenen bevorzugten Ausführungsformen der Redundanzventilanordnung gemäß dem ersten Aspekt der Erfindung an jeder Achse des Fahrzeugs vorgesehen. Auf diese Weise kann eine achsenweise redundante Bremsung über die Redundanzventilanordnung des Fahrzeugs erreicht werden. Vorzugsweise ist an jedem Betriebsbremsaktuator eine eigene Redundanzventilanordnung vorgesehen. Auf diese Weise kann die Redundanzventilanordnung radgerecht redundant einen Bremsdruck aussteuern. Es kann auch vorgesehen sein, dass beispielsweise an der Vorderachse an jedem Betriebsbremsaktuator eine Redundanzventilanordnung vorgesehen ist, wobei an der Hinterachse nur für diese eine einzelne Redundanzventilanordnung vorgesehen ist. In der Vorderachse wäre somit eine radgerechte Aussteuerung erlaubt, während an der Hinterachse nur eine achsengerechte Aussteuerung realisiert ist.

In einer Ausführungsform ist eine zweite Redundanzventilanordnung vorgesehen, die nach einer der vorstehend beschriebenen, bevorzugten Ausführungsformen der Redundanzventilanordnung gemäß dem ersten Aspekt der Erfindung ausgebildet ist, wobei der Betriebsbremsdruckanschluss der zweiten Redundanzventilanordnung mit dem Betriebsachsmodulator verbunden ist und von diesem den Betriebsbremsdruck empfängt und der Redundanzbremsdruckanschluss der zweiten Redundanzventilanordnung mit dem Redundanz-Achsmodulator verbunden ist und von diesem den Redundanzbremsdruck empfängt. Der Bremsaktuatoranschluss der zweiten Redundanzventilanordnung ist vorzugsweise mit wenigstens einem zweiten Betriebsbremsaktuator an der ersten Achse verbunden.

In einer weiteren bevorzugten Ausführungsform umfasst das elektronisch steuerbare pneumatische Bremssystem auch einen zweiten Betriebs-Achsmodulator, der mit der Betriebs-Steuereinheit verbunden ist und von dieser Betriebsbremssignale empfängt, und basierend hierauf einen zweiten Betriebsbremsdruck für eine zweite Achse aussteuert. Ferner umfasst das Bremssystem einen zweiten Redundanz-Achsmodulator, der mit der Redundanz-Steuereinheit verbunden ist und von dieser Redundanzbremssignale empfängt und basierend hierauf einen zweiten Redundanzbremsdruck für die zweite Achse aussteuert. Das elektronisch steuerbare pneumatische Bremssystem weist in dieser Ausführungsform vorzugsweise wenigstens eine dritte Redundanzventilanordnung nach einer der vorstehend beschriebenen bevorzugten Ausführungsformen einer Redundanzventilanordnung gemäß dem ersten Aspekt der Erfindung auf. Dabei ist der Betriebsbremsdruckanschluss der dritten Redundanzventilanordnung vorzugsweise mit dem zweiten Betriebs-Achsmodulator verbunden und empfängt von diesem den zweiten Betriebsbremsdruck und der Redundanzbremsdruckanschluss der dritten Redundanzventilanordnung ist mit dem zweiten Redundanz-Achsmodulator verbunden und empfängt von diesem den zweiten Redundanzbremsdruck. Ferner ist der Bremsaktuatoranschluss der dritten Redundanzventilanordnung vorzugsweise mit wenigstens einem dritten Betriebsbremsaktuator an der zweiten Achse verbunden. Er kann zusätzlich auch mit einem vierten Betriebsbremsaktuator der zweiten Achse verbunden sein oder weiteren Betriebsbremsaktuatoren an der zweiten Achse oder einer weiteren Achse, wie z.B. einer Lift-Achse oder dergleichen.

In einem dritten Aspekt löst die Erfindung die eingangs genannte Aufgabe bei einem Fahrzeug, vorzugsweise Nutzfahrzeug der eingangs genannten Art, umfassend wenigstens eine erste Achse und eine zweite Achse sowie ein elektronisch steuerbares pneumatisches Bremssystem dadurch, dass das elektronisch steuerbare pneumatische Bremssystem gemäß einer der vorstehend beschriebenen Ausführungsformen des elektronisch steuerbaren pneumatischen Bremssystems gemäß dem zweiten Aspekt der Erfindung ausgebildet ist.

Es soll verstanden werden, dass das elektronisch steuerbare pneumatische Bremssystem gemäß dem zweiten Aspekt der Erfindung und das Fahrzeug gemäß dem dritten Aspekt der Erfindung gleiche und ähnliche Unteraspekte aufweisen, wie sie insbesondere in den abhängigen Ansprüchen niedergelegt sind. Insofern wird für weitere Ausführungsformen und deren Vorteile vollumfänglich auf die obige Beschreibung Bezug genommen.

Die Erfindung löst die Aufgabe in einem vierten Aspekt durch ein Verfahren zum Steuern eines elektronisch steuerbaren pneumatischen Bremssystems umfassend die Schritte: in einem Betriebsfall des elektronisch steuerbaren pneumatischen Bremssystems: Aussteuern eines Betriebsbremsdrucks durch einen Betriebsbremsdruckmodulator an einem Betriebsbremsdruckanschluss einer Redundanzventilanordnung, Ansteuern der Redundanzventilanordnung durch eine Betriebs-Steuereinheit basierend auf ersten Raddrehzahlsignalen und dadurch vorzugsweise schlupfgeregeltes Aussteuern des Betriebsbremsdrucks an einem Bremsaktuatoranschluss der Redundanzventilanordnung; und in einem Redundanzfall des elektronisch steuerbaren pneumatischen Bremssystems: Aussteuern eines Redundanzbremsdrucks durch einen Redundanzbremsdruck-Achsmodulator an einem Redundanzbremsdruckanschluss der Redundanzventilanordnung, und Ansteuern der Redundanzventilanordnung durch eine Redundanz-Steuereinheit basierend auf den ersten Raddrehzahlsignalen und dadurch vorzugsweise schlupfgeregeltes Aussteuern des Redundanzbremsdrucks an dem Bremsaktuatoranschluss.

Das Verfahren gemäß dem vierten Aspekt der Erfindung wird vorzugsweise bei einem elektronisch steuerbaren pneumatischen Bremssystem gemäß dem zweiten Aspekt der Erfindung umgesetzt. Vorzugsweise ist die im Verfahren gemäß dem vierten Aspekt der Erfindung genannte Redundanzventilanordnung eine Redundanzventilanordnung gemäß einer der vorstehend beschriebenen bevorzugten Ausführungsformen einer Redundanzventilanordnung gemäß dem ersten Aspekt der Erfindung.

Es soll verstanden werden, dass das Verfahren gemäß dem vierten Aspekt der Erfindung, die Redundanzventilanordnung gemäß dem ersten Aspekt der Erfindung und das elektronisch steuerbare pneumatische Bremssystem gemäß dem zweiten Aspekt der Erfindung gleiche und ähnliche Unteraspekte aufweisen, wie sie insbesondere in den abhängigen Ansprüchen niedergelegt sind. Insofern ist vollumfänglich auf die obige Beschreibung Bezug genommen. Insbesondere können oben beschriebene funktionelle Merkmale auch im Rahmen des Verfahrens gemäß dem vierten Aspekt der Erfindung Verfahrensschritte bilden und die oben beschriebenen Funktionen können im Rahmen des Verfahrens umgesetzt und ausgeführt werden.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 eine schematische Darstellung einer Redundanzventilanordnung gemäß einem ersten Ausführungsbeispiel;
Fig. 2 eine schematische Darstellung einer Redundanzventilanordnung samt einem ABS-Ventil in einem zweiten Ausführungsbeispiel;
Fig. 3 eine Redundanzventilanordnung in einem dritten Ausführungsbeispiel;
Fig. 4 eine schematische Darstellung eines elektronisch steuerbaren pneumatischen Bremssystems gemäß einem Ausführungsbeispiel;
Fig. 5 eine Redundanzventilanordnung gemäß einem vierten Ausführungsbeispiel;
Fig. 6 eine Redundanzventilanordnung gemäß einem fünften Ausführungsbeispiel; und in
Fig. 7. eine Redundanzventilanordnung gemäß einem sechsten Ausführungsbeispiel.

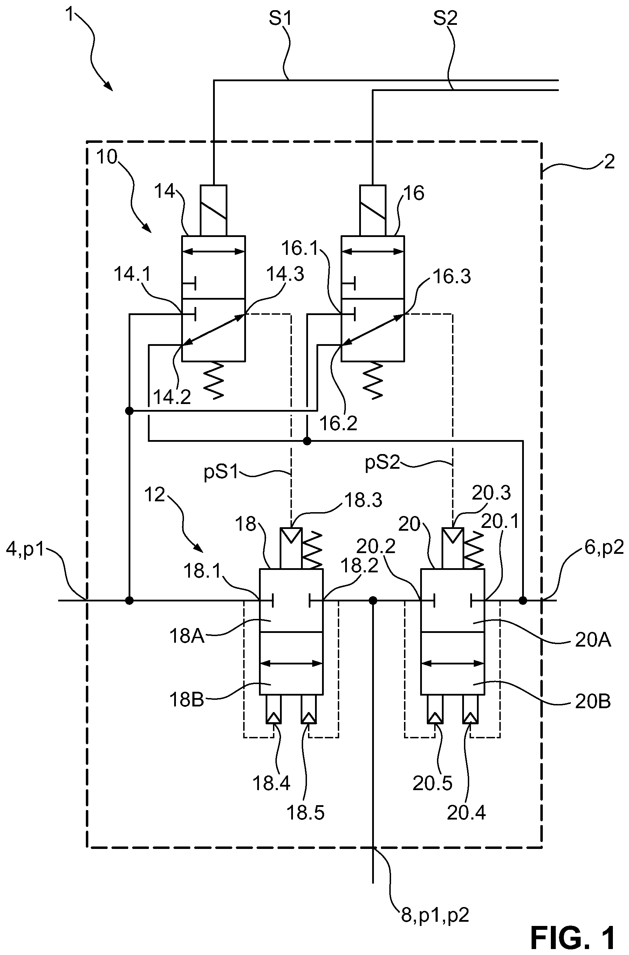

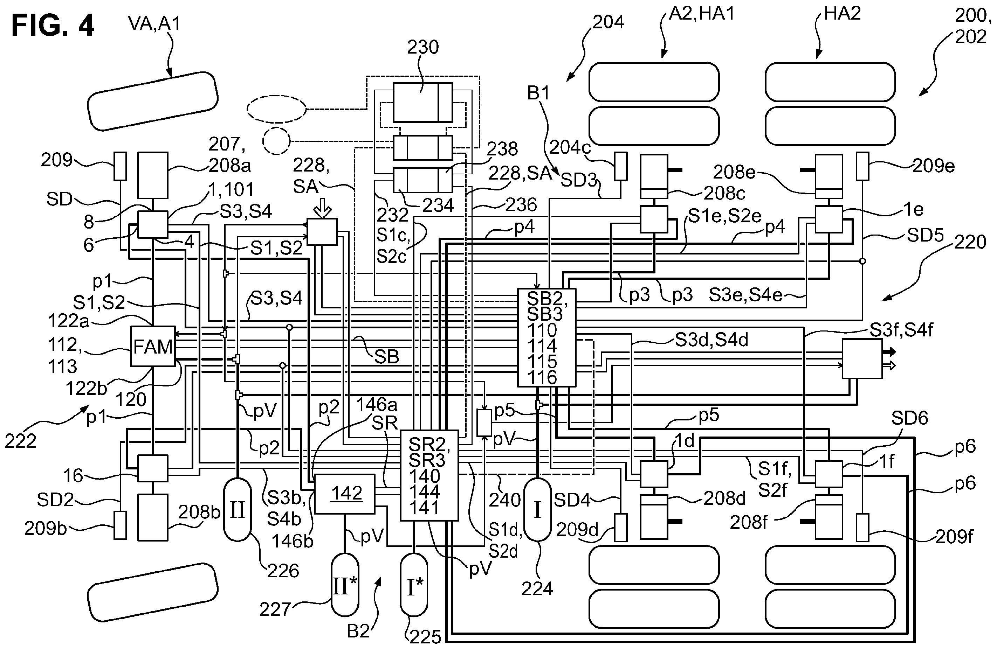

Eine Redundanzventilanordnung 1 zum redundanten Einspeisen eines redundanten Bremsdrucks in einen Betriebsbremsdruckpfad eines elektronisch steuerbaren pneumatischen Bremssystems 204 (vgl. Fig. 4) hat einen Betriebsbremsdruckanschluss 4, einen Redundanzbremsdruckanschluss 6 und einen Bremsaktuatoranschluss 8. Auch, wenn in Fig. 1 durch die gestrichelte Linie ein Redundanzventilmodulgehäuse 2 angedeutet ist, soll verstanden werden, dass die einzelnen Komponenten der Redundanzventilanordnung 1 auch separat in dem Fahrzeug verbaut sein können, oder in andere Module oder in Baueinheiten, gemeinsam, teilweise gemeinsam oder unabhängig voneinander, integriert sein können. Für diesen Fall können dann der Betriebsbremsdruckanschluss 4, der Redundanzbremsdruckanschluss 6 und der Bremsaktuatoranschluss 8 unmittelbar an einzelnen Bauteilen angeordnet sein. Insofern ist die Darstellung in den Figuren nur schematisch zu verstehen. Für den Fall, dass aber ein Redundanzventilmodulgehäuse 2 vorgesehen ist, können der Betriebsbremsdruckanschluss 4, der Redundanzbremsdruckanschluss 6 und der Bremsaktuatoranschluss 8 an diesem Redundanzventilmodulgehäuse 2 ausgebildet sein.

An dem Betriebsbremsdruckanschluss 4 wird ein Betriebsbremsdruck p1 bereitgestellt, wie später mit Bezug auf Fig. 4 noch genauer beschrieben werden wird. An dem Redundanzbremsdruckanschluss 6 wird ein Redundanzbremsdruck p2 bereitgestellt, wie später mit Bezug auf Fig. 4 noch genauer beschrieben werden wird. An den Bremsaktuatoranschluss 8 können ein oder mehrere Bremsaktuatoren angeschlossen werden, wie später mit Bezug auf Fig. 4 noch genauer beschrieben werden wird. Die Redundanzventilanordnung 1 steuert in Abhängigkeit von bestimmten Signalen (wie später noch genauer beschrieben werden wird) an dem Bremsaktuatoranschluss 8 entweder den am Betriebsbremsdruckanschluss 4 empfangenen Betriebsbremsdruck p1 oder den am Redundanzbremsdruckanschluss 6 empfangenen Redundanzbremsdruck p2 aus. Auch können abgeleitete Drücke von den bereitgestellten Drücken ausgesteuert werden, je nach Ausgestaltung und Schaltstellung.

In dem in Fig. 1 gezeigten Ausführungsbeispiel umfasst die Redundanzventilanordnung 1 eine Magnetventileinheit 10, die sowohl mit dem Betriebsbremsdruckanschluss 4 als auch mit dem Redundanzbremsdruckanschluss 6 verbunden ist. Die Magnetventileinheit 10 empfängt ein erstes Schaltsignal S1 und ein zweites Schaltsignal S2. In Abhängigkeit von diesen ersten und zweiten Schaltsignalen S1, S2 wird gemäß dem in Fig. 1 gezeigten Ausführungsbeispiel an dem Bremsaktuatoranschluss 8 entweder der Betriebsbremsdruck p1 oder der Redundanzbremsdruck p2 ausgesteuert.

Konkret umfasst die Magnetventileinheit 10 in dem hier gezeigten Ausführungsbeispiel ein Betriebs-Vorsteuerventil 14, welches hier als monostabiles 3/2-Wege-Ventil ausgebildet ist. Das Betriebs-Vorsteuerventil 14 umfasst einen ersten Betriebs-Vorsteuerventilanschluss 14.1, der mit dem Betriebsbremsdruckanschluss 4 verbunden ist und von diesem den Betriebsbremsdruck p1 empfängt. Es umfasst einen zweiten Betriebs-Vorsteuerventilanschluss 14.2, der mit dem Redundanzbremsdruckanschluss 6 verbunden ist und den Redundanzbremsdruck p2 empfängt. Der dritte Betriebs-Vorsteuerventilanschluss 14.3 ist in dem hier gezeigten Ausführungsbeispiel mit einer Hauptventileinheit 12 verbunden, könnte aber in anderen Ausführungsbeispielen ebenso mit dem Bremsaktuatoranschluss 8 verbunden sein. Das Betriebs-Vorsteuerventil 14 kann wechselweise den ersten Betriebs-Vorsteuerventilanschluss 14.1 oder den zweiten Betriebs-Vorsteuerventilanschluss 14.2 mit dem dritten Betriebs-Vorsteuerventilanschluss 14.3 verbinden und so wechselweise den Betriebsbremsdruck p1 oder den Redundanzbremsdruck p2 an dem dritten Betriebs-Vorsteuerventilanschluss 14.3 aussteuern. In der in Fig. 1 gezeigten ersten Schaltstellung ist der zweite Betriebs-Vorsteuerventilanschluss 14.2 mit dem dritten Betriebs-Vorsteuerventilanschluss 14.3 verbunden und in der zweiten, in Fig. 1 nicht gezeigten Schaltstellung, ist der erste Betriebs-Vorsteuerventilanschluss 14.1 mit dem dritten Betriebs-Vorsteuerventilanschluss 14.3 verbunden. Das Betriebs-Vorsteuerventil 14 ist monostabil in der ersten in Fig. 1 gezeigten Schaltstellung und wird bei Aussteuerung des ersten Schaltsignals S1 in die zweite in Fig.1 nicht gezeigte Schaltstellung verbracht.

Weiterhin umfasst die Magnetventileinheit 10 ein Redundanz-Vorsteuerventil 16. Das Redundanz-Vorsteuerventil 16 ist als monostabiles 3/2-Wege-Ventil ausgebildet und hat einen ersten Redundanz-Vorsteuerventilanschluss 16.1, der mit dem Redundanzbremsdruckanschluss 6 verbunden ist und von diesem Redundanzbremsdruck p2 empfängt. Ein zweiter Redundanz-Vorsteuerventilanschluss 16.2 ist mit dem Betriebsbremsdruckanschluss 4 verbunden und empfängt Betriebsbremsdruck p1 von diesem. Ein dritter Redundanz-Vorsteuerventilanschluss 16.3 ist in dem in Fig. 1 gezeigten Ausführungsbeispiel mit der Hauptventileinheit 12 verbunden, könnte aber ebenso unmittelbar oder unter Zwischenschaltung eines Ventils mit dem Bremsaktuatoranschluss 8 verbunden sein. Das Redundanz-Vorsteuerventil 16 verbindet wechselweise den ersten und den zweiten Redundanz-Vorsteuerventilanschluss 16.1, 16.2 mit dem dritten Redundanz-Vorsteuerventilanschluss 16.3. In einer ersten in Fig. 1 gezeigten Schaltstellung ist der zweite Redundanz-Vorsteuerventilanschluss 16.2 mit dem dritten Redundanz-Vorsteuerventilanschluss 16.3 verbunden und in einer zweiten, in Fig. 1 nicht gezeigten Schaltstellung, ist der erste Redundanz-Vorsteuerventilanschluss 16.1 mit dem dritten Redundanz-Vorsteuerventilanschluss 16.3 verbunden. Das Redundanz-Vorsteuerventil 16 ist stabil und stromlos in der ersten in Fig. 1 gezeigten Schaltstellung und kann durch Bereitstellen des zweiten Schaltsignals S2 in die zweite in Fig. 1 nicht gezeigte Schaltstellung gebracht werden.

Die Hauptventileinheit 12 ist so verschaltet, dass bei Aussteuerung des Betriebsbremsdrucks p1 am Betriebsbremsdruckanschluss 4 und gleichzeitiger erster Schaltstellung des Betriebs-Vorsteuerventils 14, der Betriebsbremsdruck p1 am Bremsaktuatoranschluss 8 ausgesteuert wird. Umgekehrt wird bei der ersten Schaltstellung des Redundanz-Vorsteuerventils 16 und Aussteuerung des Betriebsbremsdruck p1 am Betriebsbremsdruckanschluss 4 der Redundanzbremsdruckanschluss 6 gesperrt, sodass der Redundanzbremsdruck p2 nicht zum Bremsaktuatoranschluss 8 durchgesteuert werden kann. Hierdurch wird eine Aufdoppelung der Drücke verhindert. Durch Schalten des Betriebs-Vorsteuerventils 14 oder Redundanz-Vorsteuerventils 16 in jeweils andere Schaltstellung kann auch das Gegenteil erreicht werden.

Die Hauptventileinheit 12 umfasst in dem hier gezeigten Ausführungsbeispiel (Fig. 1) ein erstes Betriebs-Hauptventil 18, welches pneumatisch ausgebildet ist. Das Betriebs-Hauptventil ist als 2/2-Wege-Ventil ausgebildet und umfasst einen ersten Betriebs-Hauptventilanschluss 18.1 und einen zweiten Betriebs-Hauptventilanschluss 18.2, die in einer Sperrstellung 18A getrennt sind und in einer Durchlassstellung 18B pneumatisch verbunden sind. Der erste Betriebs-Hauptventilanschluss 18.1 ist mit dem Betriebsbremsdruckanschluss 4 verbunden und empfängt Betriebsbremsdruck p1 von diesem. Der zweite Betriebs-Hauptventilanschluss 18.2 ist mit dem Bremsaktuatoranschluss 8 verbunden. Zum Schalten des Betriebs-Hauptventils 18 von der Sperrstellung 18A in die Durchlassstellung 18B und umgekehrt ist ein Betriebs-Steueranschluss 18.3 vorgesehen. Der Betriebs-Steueranschluss 18.3 empfängt einen ersten Steuerdruck pS1 von der Magnetventileinheit 10. Der erste Steuerdruck pS1 wird in Abhängigkeit von dem ersten und/oder zweiten Schaltsignal S1, S2 ausgesteuert. In dem in Fig. 1 gezeigten Ausführungsbeispiel wird der erste Steuerdruck pS1 durch das Betriebs-Vorsteuerventil 14 ausgesteuert. In dem konkreten Ausführungsbeispiel ist der Betriebs-Steueranschluss 18.3 mit dem dritten Betriebs-Vorsteuerventilanschluss 14.3 verbunden, um so den ersten Vorsteuerdruck pS1, der dem Betriebsbremsdruck p1 entsprechen kann oder ein davon abgeleiteter Druck ist, zu empfangen. Das Betriebs-Hauptventil 18 ist federbelastet in die Sperrstellung 18A vorgespannt. Auch der Betriebs-Steueranschluss 18.3 ist so ausgebildet, dass, sofern der erste Steuerdruck pS1 am Betriebs-Steueranschluss 18.3 einen ersten Schwellwert überschreitet, das Betriebs-Hauptventil 18 in der Sperrstellung 18A verharrt und nicht in die Durchlassstellung 18B geschaltet werden kann. Zum Verbringen des Betriebs-Hauptventils von der Sperrstellung 18A in die Durchlassstellung 18B ist ein erster Betriebs-Rückführanschluss 18.4 vorgesehen, der den am Betriebsbremsdruckanschluss 4 anliegenden Druck empfängt. Sobald der am Betriebsbremsdruckanschluss 4 anliegende Druck, insbesondere der Betriebsbremsdruck p1, einen zweiten vorbestimmten Schwellwert überschreitet, wird das Betriebs-Hauptventil 18 von der Sperrstellung 18A in die Durchlassstellung 18B geschaltet, unter Überwindung der Federkraft der Federvorspannung. Allerdings kann das Betriebs-Hauptventil 18 dann nicht von der Sperrstellung 18A in die Durchlassstellung 18B geschaltet werden, wenn der erste Steuerdruck pS1 am Betriebs-Steueranschluss 18.3 anliegt. Die ersten und zweiten Schwellwerte sind entsprechend gewählt. Das heißt, das Betriebs-Hauptventil 18 wird dann in die Durchlassstellung 18B geschaltet, wenn einerseits der Betriebsbremsdruck p1 am Betriebsbremsdruckanschluss 4 ausgesteuert ist und andererseits das Betriebs-Vorsteuerventil 14 in der ersten in Fig. 1 gezeigten Schaltstellung ist, also das erste Schaltsignal S1 nicht ausgesteuert wird. Das Betriebs-Hauptventil 18 umfasst ferner einen zweiten Betriebs-Rückführanschluss 18.5, der den am zweiten Betriebs-Hauptventilanschluss 18.2 ausgesteuerten Druck zurückführt, um so eine Selbsthaltung zu realisieren.

Das Redundanz-Hauptventil 20 ist entsprechend dem Betriebs-Hauptventil 18 ausgebildet. Es ist ebenfalls als pneumatisch schaltbares 2/2-Wege-Ventil ausgebildet und hat einen ersten Redundanz-Hauptventilanschluss 20.1 und einen zweiten Redundanz-Hauptventilanschluss 20.2, die in einer Sperrstellung 20A getrennt und in einer Durchlassstellung 20B pneumatisch miteinander verbunden sind. Der erste Redundanz-Hauptventilanschluss 20.1 ist mit dem Redundanzbremsdruckanschluss 6 verbunden und empfängt Redundanzbremsdruck p2 von diesem. Der zweite Redundanz-Hauptventilanschluss 20.2 ist mit dem Bremsaktuatoranschluss 8 verbunden, um so den Redundanzbremsdruck p2 an diesem aussteuern zu können. Das Redundanz-Hauptventil 20 kann durch einen zweiten Steuerdruck pS2, der von der Magnetventileinheit 10 bereitgestellt wird, in Abhängigkeit von dem ersten und/oder zweiten Schaltsignal S1, S2, von der Sperrstellung 20A in die Durchlassstellung 20B und umgekehrt geschaltet werden. Das Redundanz-Hauptventil 20 ist federbelastet in die Sperrstellung 20A vorgespannt. Das Redundanz-Hauptventil 20 umfasst weiterhin einen ersten Redundanz-Rückführanschluss 20.4, an dem der am Redundanzbremsdruckanschluss 6 anliegende Druck, insbesondere der Redundanzbremsdruck p2, ausgesteuert wird. Überschreitet dieser einen dritten Schwellwert, kann das Redundanz-Hauptventil 20 von der Sperrstellung 20A in der Durchlassstellung 20B geschaltet werden, bei Überwindung der Federkraft der Rückstellfeder. Wird allerdings gleichzeitig der zweite Steuerdruck pS2 am Redundanz-Steueranschluss 20.3 ausgesteuert, und überschreitet dieser einen vierten Schwellwert, kann das Redundanz-Hauptventil 20 nicht in die Durchlassstellung 20B geschaltet werden, sondern verharrt in der Sperrstellung 20A. Auf diese Weise kann also der Redundanzbremsdruck p2 ausgesperrt werden. Der zweite Steuerdruck pS2 wird dann ausgesteuert, wenn der Betriebsbremsdruck p1 ausgesteuert wird, und gleichzeitig das Redundanz-Vorsteuerventil 16 in der ersten in Fig. 1 gezeigten Schaltstellung ist.

Im normalen Fahrbetrieb sollte typischerweise der Betriebsbremsdruck p1 am Bremsaktuatoranschluss 8 ausgesteuert werden. Zu diesem Zweck sollten möglichst weder das erste noch das zweite Schaltsignal S1, S2 ausgesteuert werden, sodass das Betriebs-Hauptventil 18 in die Durchlassstellung 18B schalten kann und das Redundanz-Hauptventil 20 in der Sperrstellung 20A verharrt.

Soll aber nun der Redundanzbremsdruck p2 am Bremsaktuatoranschluss 8 ausgesteuert werden, sollte wenigstens das Redundanz-Vorsteuerventil 16 in die zweite in Fig. 1 nicht gezeigte Schaltstellung gebracht werden. Das Betriebs-Hauptventil 18 wird, sofern der Betriebsbremsdruck p1 nicht am Betriebsbremsdruckanschluss 4 ausgesteuert wird, bereits aufgrund der Federvorspannung in die Sperrstellung 18A verbracht. Um ein Verharren des Betriebs-Hauptventils 18 in der Sperrstellung 18A sicherzustellen, sollte zudem das Betriebs-Vorsteuerventil 14 durch Bereitstellen des ersten Schaltsignals S1 in die zweite in Fig. 1 nicht gezeigte Schaltstellung gebracht werden. Eine Entlüftung des Betriebsbremsdrucks p1 kann entweder über den am Betriebsbremsdruckanschluss 4 angeschlossenen Bremsdruckmodulator erfolgen, oder aber auch durch Schalten des Redundanz-Hauptventils 20 über einen am Redundanzbremsdruckanschluss 6 angeschlossenen Redundanzmodulator.

Das erste und das zweite Schaltsignal S1, S2 werden vorzugsweise von einer Redundanz-Steuereinheit bereitgestellt, können aber auch von einer Betriebs-steuereinheit bereitgestellt werden, oder das erste Schaltsignal S1 wird in einer Betriebssteuereinheit und das zweite Schaltsignal S2 wird von einer Redundanzsteuereinheit oder umgekehrt bereitgestellt. Das Betriebs-Vorsteuerventil 14 und das Redundanz-Vorsteuerventil 16 können von einer oder von zwei unabhängigen Spannungsquellen versorgt werden, oder werden beide redundant mit Spannung versorgt. Auch kann vorgesehen sein, dass der Betriebsbremsdruck p1 und der Redundanzbremsdruck p2 aus demselben oder aus zwei verschiedenen, vorzugsweise unabhängigen, Druckluftvorräten gespeist werden.

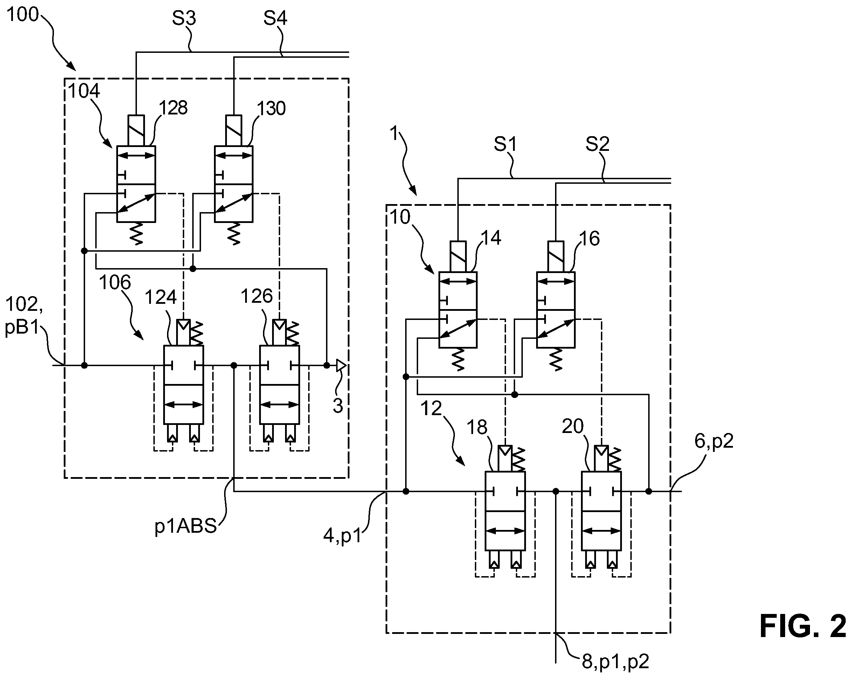

In Fig. 2 ist ein Ausführungsbeispiel mit einer Redundanzventilanordnung 1 gemäß dem ersten in Fig. 1 gezeigten Ausführungsbeispiel dargestellt, wobei dem Betriebsbremsdruckanschluss 4 ein ABS-Ventil 100 vorgeschaltet ist. Das ABS-Ventil 100 kann als herkömmliches ABS-Ventil ausgebildet sein, wie im Stand der Technik bekannt, und hat einen Bremsmodulatoranschluss 102, an dem ein erster Bremsdruck pB1 bereitgestellt werden kann, der dann durch das ABS-Ventil 100 als ABS-modulierter Betriebsbremsdruck p1ABS ausgesteuert wird. Ein ABS-modulierter Betriebsbremsdruck p1ABS ist schlupfgeregelt.

Das ABS-Ventil 100 weist eine ABS-Vorsteuereinheit 104 und eine ABS-Hauptventileinheit 106 auf. Die ABS-Vorsteuereinheit 104 empfängt ein drittes und ein viertes Schaltsignal S3, S4, die basierend auf Raddrehzahlsignalen ausgesteuert werden. Die ABS-Hauptventileinheit 106 umfasst ein ABS-Einlassventil 124 und ein ABS-Auslassventil 126, die pneumatisch gesteuert sind. Das ABS-Einlassventil 124 ist mit dem Bremsmodulatoranschluss 102 verbunden und kann durch Schalten den ABS-modulierten Betriebsbremsdruck p1ABS aussteuern. Das ABS-Auslassventil 126 ist ebenfalls pneumatisch gesteuert und mit einer Entlüftung 3 verbunden, um so dem ABS-modulierten Betriebsbremsdruck p1ABS oder auch den Betriebsbremsdruck p1, wenn dieser nicht ABS-moduliert ist, zu entlüften. Zu diesem Zweck wird dann das ABS-Auslassventil 126 in eine Durchlassstellung geschaltet. Das ABS-Einlassventil 124 und das ABS-Auslassventil 126 werden basierend auf der ABS-Vorsteuereinheit 104 geschaltet, die in dem in Fig. 2 gezeigten Ausführungsbeispiel ein ABS-Einlassvorsteuerventil 128 und ein ABS-Auslassvorsteuerventil 130 aufweist.

Neben dem Vorteil, dass an dem Betriebsbremsdruckanschluss 4 ein ABS-modulierter Betriebsbremsdruck p1ABS bereitgestellt werden kann, hat das ABS-Ventil 100 auch den Vorteil, dass der Betriebsbremsdruck p1 über die Entlüftung 3 des ABS-Ventils 100 entlüftet werden kann. Dies ist dann relevant, wenn Druckluft aus dem Bremsdruckaktuator, der an den Bremsaktuatoranschluss 8 angeschlossen ist, entlüftet werden soll, um eine Bremskraft abzubauen.

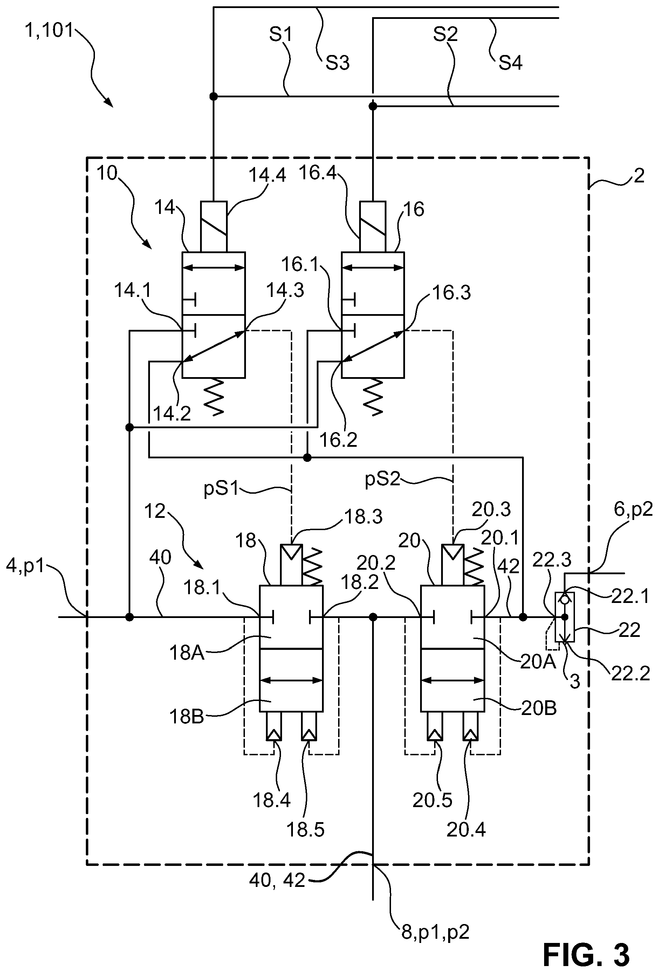

In dem in Fig. 3 gezeigten Ausführungsbeispiel ist die Redundanzventilanordnung 1 wiederum im Wesentlichen entsprechend der in Fig. 1 dargestellten Ausführungsform ausgebildet und gleiche und ähnliche Elemente sind mit den gleichen Bezugszeichen versehen, sodass hierfür vollumfänglich auf die obige Beschreibung Bezug genommen wird. Im Unterschied zum ersten Ausführungsbeispiel (Fig. 1) ist die Redundanzventilanordnung 1 im dritten Ausführungsbeispiel (Fig. 3) als ABS-Ventil 101 ausgebildet.

Während in dem zweiten Ausführungsbeispiel gemäß Fig. 2 dem Betriebsbremsanschluss 4 das ABS-Ventil 100 vorgeschaltet war, ist die Redundanzventilanordnung 1 gemäß dem in Fig. 3 gezeigten Ausführungsbeispiel so ausgebildet, dass sie auch eine ABS-Funktionalität ausführen kann. Zu diesem Zweck sind zunächst das Betriebs-Vorsteuerventil 14 und das Redundanz-Vorsteuerventil 16 so verkabelt, dass eben nicht nur das erste oder zweite Schaltsignal S1, S2 bereitgestellt werden können, die vorzugsweise von einer Redundanz-Steuereinheit 140 (vgl. Fig. 4) ausgesteuert werden, sondern auch das dritte und vierte Schaltsignal S3, S4, welches vorzugsweise von einer Betriebs-Steuereinheit 110 (vgl. Fig. 4) bereitgestellt werden. Das dritte und das vierte Schaltsignal S3, S4 sind Schaltsignale, die basierend auf Raddrehzahlsensorsignalen ausgesteuert werden und somit auch als ABS-Signale bezeichnet werden können. Sie dienen dazu, den Betriebsbremsdruck p1, der dem Betriebsbremsanschluss 4 durch einen Betriebsbremsmodulator bereitgestellt wird, so zu modulieren, dass an dem Bremsaktuatoranschluss 8 ein ABS-modulierter bzw. schlupfgeregelter Betriebsbremsdruck p1, p1ABS ausgesteuert wird. Dazu muss der am Betriebsbremsanschluss 4 bereitgestellte Betriebsbremsdruck p1 teilweise entlüftet werden, das heißt, der am Bremsaktuatoranschluss 8 ausgesteuerte Druck muss zeitweise reduziert werden, um so einen an dem Bremsaktuatoranschluss 8 angeschlossenen Bremsaktuator zu lösen und ein Blockieren von Rädern zu verhindern. Zu diesem Zweck können in dem dritten Ausführungsbeispiel (Fig. 3) das Betriebs-Vorsteuerventil 14 und das Redundanz-Vorsteuerventil 16 nicht nur durch das erste und zweite Schaltsignal S1, S2 so angesteuert werden, dass im Betriebsfall des Fahrzeugs der Redundanzbremsdruck p2 ausgesperrt und der Betriebsbremsdruck p1 durchgesteuert werden kann, sondern auch können das Betriebs-Vorsteuerventil 14 und das Redundanz-Vorsteuerventil 16 durch das dritte und vierte Schaltsignal S3, S4 so angesteuert werden, dass der am Bremsaktuatoranschluss 8 ausgesteuerte Druck zeitweise reduziert wird, um einen daran angeschlossenen Bremsaktuator zu lösen. Dies kann sowohl mit Bezug auf den Betriebsbremsdruck p1 als auch auf den Redundanzbremsdruck p2 geschehen. Das heißt, sowohl der Betriebsbremsdruck p1 als auch der Redundanzbremsdruck p2 können ABS-moduliert bzw. schlupfgeregelt werden. Wird nur eines der dritten und vierten Schaltsignale S3, S4 bereitgestellt, kann auch nur einer des Betriebsbremsdrucks p1 und des Redundanzbremsdrucks p2 schlupfgeregelt ausgesteuert werden.

Um nun den Bremsaktuatoranschluss 8 entlüften zu können, ist in der hier gezeigten Ausführungsform vorteilhaft ein Schnellentlüftungsventil 22 vorgesehen, welches in dem in Fig. 3 gezeigten Ausführungsbeispiel mit in das Redundanzventilmodulgehäuse 2 integriert ist, aber ebenso extern zu diesem angeordnet sein könnte. Konkret ist das Schnellentlüftungsventil 22 in dem hier gezeigten Ausführungsbeispiel (Fig. 3) zwischen den Redundanzbremsdruckanschluss 6 und die Hauptventileinheit 12, genauer gesagt den zweiten Redundanz-Hauptventilanschluss 20.2, geschaltet. Das Schnellentlüftungsventil 22 umfasste einen ersten Schnellentlüftungsventilanschluss 22.1, einen zweiten Schnellentlüftungsventilanschluss 22.2 und einen dritten Schnellentlüftungsventilanschluss 22.3. Der erste Schnellentlüftungsventilanschluss 22.1 ist mit dem Redundanzbremsdruckanschluss 6 verbunden und empfängt somit Redundanzbremsdruck p2 von diesem. Der zweite Schnellentlüftungsventilanschluss 22.2 ist mit einer Entlüftung 3 verbunden und der dritte Schnellentlüftungsventilanschluss 22.3 ist mit dem zweiten Redundanz-Hauptventilanschluss 20.2 verbunden. Das Schnellentlüftungsventil 22 ist so gestaltet, dass es im unbetätigten und drucklosen Zustand stets den zweiten mit dem dritten Schnellentlüftungsventilanschluss 22.2, 22.3 verbindet, sodass der zweite Redundanz-Hauptventilanschluss 20.2 in diesem unbetätigten Zustand mit der Entlüftung 3 verbunden ist. Über das Redundanz-Hauptventil 20 kann demnach der Bremsaktuatoranschluss 8 entlüftet werden. Das Redundanz-Hauptventil 20 nimmt somit die Funktion des ABS-Auslassventils 110 gemäß Fig. 2 ein, wenn es durch Entlüften des Redundanz-Steueranschlusses 20.3 dadurch, dass das Redundanz-Vorsteuerventil 16 durch das vierte Schaltsignal S4 in die zweite in Fig. 3 nicht gezeigte Schaltstellung geschaltet wird, entlüftet wird. In der zweiten Schaltstellung des Redundanz-Vorsteuerventils 16, das hier auch die Funktion des ABS-Auslassvorsteuerventils 114 einnimmt, ist der dritte Redundanz-Vorsteuerventilanschluss 16.3 mit dem ersten Redundanz-Vorsteuerventilanschluss 16.1 verbunden, der seinerseits mit dem dritten Schnellentlüftungsventilanschluss 22.2 über Leitungen verbunden ist und somit ebenfalls mit der Entlüftung 3 verbunden ist. Wird der Redundanz-Steueranschluss 20.3 entlüftet, und liegt ein Betriebsbremsdruck p1 an dem Bremsaktuatoranschluss 8 an, wird dieser auch an dem zweiten Redundanz-Rückführanschluss 20.5 ausgesteuert, sodass das Redundanz-Hauptventil 20 in die Durchlassstellung 20B geschaltet wird. In der Folge wird der Bremsaktuatoranschluss 8 entlüftet, jedenfalls so lange bis entweder die Federbelastung des Redundanz-Hauptventils 20 dieses wieder in die Sperrstellung 20A schaltet, oder das vierte Schaltsignal S4 nicht mehr bereitgestellt wird.

Der Redundanzbremsdruck p2 kann in diesem Fall über den ersten Schnellentlüftungsventilanschluss 22.1 eingesteuert werden, welches im Normalbetrieb durch ein Ventilelement verschlossen ist. Dieses Ventilelement kommt dann aus seiner Schließstellung, wenn der Redundanzbremsdruck p2 bereitgestellt wird und das Ventilelement hierdurch in eine Öffnungsstellung gedrückt wird. Der Betriebsbremsdruck p1 kann dann vom ersten Schnellentlüftungsventilanschluss 22.1 zum dritten Schnellentlüftungsventilanschluss 22.3 strömen und von dort über das Redundanz-Hauptventil 20, welches dann in die Durchlassstellung 20B geschaltet wird, aufgrund der Aussteuerung des Redundanzbremsdrucks p2 an dem ersten Redundanz-Rückführanschluss 20.4, an den Bremsaktuatoranschluss 8. Mit 40 ist in Fig. 3 ein Betriebsbremsdruckpfad bezeichnet, der vom Betriebsbremsdruckanschluss 4 bis zum Bremsaktuatoranschluss 8 läuft. Mit 42 ist ein Entlüftungspfad bezeichnet, der vom Bremsaktuatoranschluss 8 bis zur Entlüftung 3 an dem zweiten Schnellentlüftungsventilanschluss 22.2 verläuft. Über den Redundanzbremsdruckanschluss 6 kann also der Redundanzbremsdruck p2 über einen Entlüftungspfad in den Betriebsbremsdruckpfad 40 eingesteuert werden.

Fig. 4 illustriert nun den Einsatz der Redundanzventilanordnung 1 in einem elektronisch steuerbaren pneumatischen Bremssystem 204. Das elektronisch steuerbare pneumatische Bremssystem 204 ist hier für ein Fahrzeug 200, nämlich ein Nutzfahrzeug 202 vorgesehen, welches eine erste Achse A1, die eine Vorderachse VA ist, , eine zweite Achse A2, die hier eine erste Hinterachse ist, und eine zweite Hinterachse A2 aufweist. Das elektronisch steuerbare pneumatische Bremssystem 204 weist einen ersten Betriebsbremsaktuator 207 auf, der hier ein erster Vorderachsbremsaktuator 208a ist, sowie zweite, dritte, vierte, fünfte und sechste Betriebsbremsaktuatoren 208a-208f für jeweils ein Rad. Zum Versorgen der ersten bis achten Betriebsbremsaktuatoren 208a-208f sind ein Hinterachsbremskreis 220 und ein Vorderachsbremskreis 222 vorgesehen. Der Hinterachsbremskreis 220 wird von einem ersten Betriebs-Druckluftvorrat 224 und der Vorderachsbremskreis 222 von einem zweiten Betriebs-Druckluftvorrat 226 versorgt.

Das elektronisch steuerbare pneumatische Bremssystem 204 hat eine Betriebsebene B1 sowie wenigstens eine erste Redundanzebene B2.

In der Betriebsebene B1 umfasst das elektronisch steuerbare pneumatische Bremssystem 204 eine elektronische Betriebs-Steuereinheit 110, die das elektronisch steuerbare pneumatische Bremssystem 204 in der Betriebsebene B1 steuert. Die elektronische Betriebs-Steuereinheit 110 ist über einen Fahrzeug-BUS 228 mit einer Einheit für autonomes Fahren 230 verbunden und empfängt von dieser Bremsanforderungssignale SA. Darüber hinaus ist die Betriebs-Steuereinheit 110 über eine erste Versorgungsleitung 232 mit einer ersten Spannungsquelle 234 verbunden und wird von dieser mit elektrischer Spannung versorgt. Die elektronische Betriebs-Steuereinheit 110 setzt die Bremsanforderungssignale SA um und steuert basierend hierauf Betriebs-Bremssignale SB an einem ersten Betriebs-Achsmodulator 112 aus, der hier als Vorderachsmodulator 113 ausgebildet ist. Der erste Betriebs-Achsmodulator 112 ist hier für die erste Achse A1, nämlich die Vorderachse VA, vorgesehen und kann so auch als Vorderachsmodulator 113 bezeichnet werden. Der erste Betriebs-Achsmodulator 112 ist mit dem zweiten Betriebs-Druckluftvorrat 226 verbunden und empfängt Vorratsdruck pV von diesem. Konkret wird der Vorratsdruck pV an einem ersten Vorratsanschluss 120 des ersten Betriebs-Achsmodulators 112 bereitgestellt. Der erste Betriebs-Achsmodulator 112 steuert, basierend auf den empfangenen Betriebs-Bremssignalen SB einen ersten Betriebsbremsdruck p1 an einem ersten Betriebsbremsdruckausgang 122a und einem zweiten Betriebsbremsdruckausgang 122b aus. Der erste und der zweite Betriebsbremsdruckausgang 122a, 122b sind allerdings in Fig. 4 nur getrennt dargestellt und können innerhalb des ersten Betriebs-Achsmodulators 112 tatsächlich verbunden sein, sodass dieser als sogenannter Einkanalmodulator ausgebildet ist. Er steuert sowohl am ersten Betriebsbremsdruckausgang 122a als auch am zweiten Betriebsbremsdruckausgang 122b den Betriebsbremsdruck p1 aus. In anderen Ausführungsformen kann aber der erste Betriebs-Achsmodulator 112 auch als Zweikanalachsmodulator ausgebildet sein, sodass an dem ersten und dem zweiten Betriebsbremsdruckausgang 122a, 122b radgerechte bzw. seitengerechte Drücke ausgesteuert werden.

An der in Fahrtrichtung rechten Seite ist mit dem ersten Betriebsbremsdruckausgang 122a verbunden eine Redundanzventilanordnung 1 gemäß der Erfindung vorgesehen. Diese empfängt den Betriebsbremsdruck p1 und steuert diesen im Betriebsfall an den ersten Betriebsbremsaktuator 207 bzw. den ersten Betriebsbremsaktuator 208a aus. Konkret ist die Redundanzventilanordnung 1 hier als ABS-Ventil 101 gemäß dem vorstehend beschriebenen bevorzugten Ausführungsbeispiel der Fig. 3 ausgebildet, sodass dieser auch eine ABS-Funktionalität, wie sie im Grunde aus Fahrzeugen bekannt ist, umsetzen kann. Beschrieben werden derartige ABS-Funktionalitäten beispielsweise in DE 3 728 463 A1, DE 10 2019 103 901 A1 und DE 10 2019 131 128 A1, auf deren Offenbarungsgehalt hier Bezug genommen wird und der durch Referenz hiermit einbezogen wird.

An der ersten Achse A1, hier nämlich die Vorderachse VA, ist zudem ein erster Raddrehzahlsensor 209 vorgesehen, welcher erste Raddrehzahlsignale SD an der Betriebs-Steuereinheit 110 bereitstellt. Die Betriebs-Steuereinheit 110 ist dazu ausgebildet, die ersten Raddrehzahlsignale SD zu verarbeiten und das dritte und das vierte Schaltsignal an der Redundanzventilanordnung 1 bereitzustellen, um so eine Schlupfregelung bzw. ABS-Modulation des Betriebsbremsdrucks p1 zu erreichen und ein Blockieren des vorderen rechten Rads des Fahrzeugs 200 zu vermeiden.

In dem in Fig. 4 gezeigten Ausführungsbeispiel ist für die linke Fahrzeugseite an der ersten Achse A1, nämlich der Vorderachse VA, eine zweite Redundanzventilanordnung 1b vorgesehen, die vorzugsweise identisch zur ersten Redundanzventilanordnung 1 ausgebildet ist und ebenfalls den Betriebsbremsdruck p1 von dem ersten Betriebs-Achsmodulator 112 empfängt, nämlich über den zweiten Betriebsbremsdruckausgang 122b. Auch die zweite Redundanzventilanordnung 1b ist signalleitend mit der Betriebs-Steuereinheit 110 verbunden und empfängt von dieser Schaltsignale, die in Abhängigkeit von zweiten Raddrehzahlsignalen SD2 eines zweiten Raddrehzahlsensors 209b erzeugt werden.

Eine Energieversorgung der Redundanzventilanordnung 1 und der zweiten Redundanzventilanordnung 1b in Bezug auf die dritten und vierten Schaltsignale S3, S4 erfolgt im hier gezeigten Ausführungsbeispiel über die erste Spannungsquelle 234.

Um die zweite Achse A2 bzw. die erste und die zweite Hinterachse HA1, HA2 zu bremsen, umfassen das elektronisch steuerbare pneumatische Bremssystem 204 in der Betriebsebene B1 einen zweiten Betriebs-Achsmodulator 114, der hier für die erste und die zweite Hinterachse HA1, HA2 vorgesehen ist und somit auch als Hinterachsmodulator 115 bezeichnet werden kann. In dem in Fig. 4 dargestellten Ausführungsbeispiel ist der zweite Betriebs-Achsmodulator 114 mit der elektronischen Betriebs-Steuereinheit 110 zu einem Modul verbaut, welches hier als Zentralmodul 116 bezeichnet wird. Es soll aber verstanden werden, dass der zweite Betriebs-Achsmodulator 114 und die Betriebs-Steuereinheit 110 ebenso baulich getrennt sein können und dann beispielsweise über eine Signalleitung oder eine BUS-Leitung mit einander verbunden sein können. Intern steuert die elektronische Betriebs-Steuereinheit 110 zweite und dritte Betriebs-Bremssignale SB2, SB3 an dem zweiten Betriebs-Achsmodulator 114 aus, in Übereinstimmung mit den Bremsanforderungssignalen SA, die die Betriebs-Steuereinheit 110 von der Einheit für autonomes Fahren 230 empfangen hat.

Der zweite Betriebs-Achsmodulator 114 ist mit dem ersten Betriebs-Druckluftvorrat 224 verbunden und empfängt Vorratsdruck pV von diesem. In Übereinstimmung mit den zweiten und dritten Betriebs-Bremssignalen SB2, SB3 steuert der zweite Betriebs-Achsmodulator 114 wenigstens einen zweiten Betriebsbremsdruck p3 aus, in dem hier gezeigten Ausführungsbeispiel steuert er aber auch einen dritten Betriebsbremsdruck p5 aus. Der zweite Betriebsbremsdruck p3 ist in dem in Fig. 4 gezeigten Ausführungsbeispiel für die rechte Fahrzeugseite vorgesehen und der dritte Betriebsbremsdruck p5 ist für die linke Fahrzeugseite vorgesehen. Der zweite Betriebs-Achsmodulator 114, der hier als Hinterachsmodulator 115 fungiert, kann also als Zweikanalachsmodulator bezeichnet werden. Der zweite Betriebsbremsdruck p3 ist für einen dritten und fünften Betriebsbremsaktuator 208c, 208e bestimmt, während der dritte Betriebsbremsdruck p5 für einen vierten, einen sechsten Betriebsbremsaktuator 208d, 208f vorgesehen ist.

In dem in Fig. 4 gezeigten Ausführungsbeispiel ist jedem der dritten, vierten, fünften und sechsten Betriebsbremsaktuatoren 208c-208f eine Redundanzventilanordnung gemäß der Erfindung vorgeschaltet. Radnah und direkt vor dem vierten Betriebsbremsaktuator 208c ist eine dritte Redundanzventilanordnung 1c vorgesehen, radnah und vor dem vierten Betriebsbremsaktuator 208d ist eine vierte Redundanzventilanordnung 1d vorgesehen, radnah und vor dem fünften Betriebsbremsaktuator 208e ist eine fünfte Redundanzventilanordnung 1e vorgesehen und radnah und vor dem sechsten Betriebsbremsaktuator 208f ist eine sechste Redundanzventilanordnung 1f vorgesehen. Die vierte bis sechste Redundanzventilanordnung 1c-1f sind allesamt identisch zur Redundanzventilanordnung 1, 101, wie vorstehend beschrieben ausgeführt. In Abweichung dazu werden lediglich der dritten Redundanzventilanordnung 1c und der fünften Redundanzventilanordnung 1e der zweite Betriebsbremsdruck p3 statt des Betriebsbremsdrucks p1 bereitgestellt und der vierten Redundanzventilanordnung 1d und der sechsten Redundanzventilanordnung 1f wird in Abweichung dazu der dritte Betriebsbremsdruck p5 bereitgestellt.

An den ersten und zweiten Hinterachsen HA1, HA2 sind ferner dritte bis sechste Raddrehzahlsensoren 209c-209f vorgesehen, die jeweils dritte bis sechste Raddrehzahlsignale SD3, SD4, SD5, SD6 an der Betriebs-Steuereinheit 110 bereitstellen. Diese verarbeitet die dritten bis sechsten Raddrehzahlsignale SD3, SD4, SD5, SD6 und steuert entsprechende dritte und vierte Schaltsignale S3, S4, wie vorstehend mit Bezug auf die Redundanzventilanordnung 1 beschrieben, auch an der dritten bis sechsten Redundanzventilanordnung 1c-1f aus, die dann aber abhängig von den dritten bis sechsten Raddrehzahlsignalen SD3-SD6 sind. Die entsprechenden dritten und vierten Schaltsignale S3, S4 werden nachfolgend als S3c-S3f und S4c-S4f bezeichnet. Auf diese Weise können der zweite und der dritte Betriebsbremsdruck p3, p5 schlupfgeregelt, bzw. ABS-moduliert an den dritten bis fünften Betriebsbremsaktuatoren 208c-208f bereitgestellt werden, um so ein Blockieren der entsprechenden Räder zu verhindern.

In der Redundanzebene B2 umfasst das elektronisch steuerbare pneumatische Bremssystem 204 eine Redundanz-Steuereinheit 140, die dafür vorgesehen ist, das elektronisch steuerbare pneumatische Bremssystem 204 für den Fall zu steuern, wenn die Betriebsebene B1 ein oder mehrere Fehler hat, beispielsweise bei einem Stromausfall in der ersten Spannungsquelle 234, einen elektronischen Fehler in der Betriebs-Steuereinheit 110 oder dergleichen. Die elektronische Redundanz-Steuereinheit 140 ist über den Fahrzeug-BUS 228 ebenfalls mit der Einheit für autonomes Fahren 230 verbunden und empfängt von dieser ebenfalls Bremsanforderungssignale SA. Im Unterschied zu der Betriebs-Steuereinheit 110 ist die Redundanz-Steuereinheit 140 über eine zweite Versorgungsleitung 236 mit einer zweiten Spannungsquelle 238 verbunden und wird von dieser mit elektrischer Spannung versorgt. Die ersten und die zweiten Spannungsquellen 234, 238 sind unabhängig voneinander, sodass ein Ausfall in der ersten Spannungsquelle 234 nicht zu einem Verlust der zweiten Spannungsquelle 238 führt und umgekehrt. Die elektronische Betriebs-Steuereinheit 110 und die elektronische Redundanz-Steuereinheit 140 sind also elektrisch unabhängig voneinander.

Um Signale austauschen zu können, sind die Betriebs-Steuereinheit 110 und die Redundanz-Steuereinheit 140 über einen Redundanz-BUS 240 miteinander verbunden. Auf diese Weise kann die Redundanz-Steuereinheit 140 die Verfügbarkeit der Betriebs-Steuereinheit 110 ermitteln und erst, wenn die Betriebs-Steuereinheit 110 nicht oder nicht mehr richtig verfügbar ist, die Steuerung des elektronisch steuerbaren pneumatischen Bremssystems 240 übernehmen. Auch kann die Betriebs-Steuereinheit 110 die Redundanz-Steuereinheit 140 dazu veranlassen, ein oder mehrere Tests auszuführen, insbesondere den oben beschriebenen Redundanzdruck auszusteuern, um die Gangbarkeit von Ventilen aufrechtzuerhalten und so die Verfügbarkeit zu erhöhen.

In der Redundanzebene B2 ist ein Redundanz-Achsmodulator 142 vorgesehen, der mit der Redundanz-Steuereinheit 140 verbunden ist und von dieser Redundanzbremssignale SR empfängt. Der Redundanz-Achsmodulator 142 ist mit einem weiteren zweiten Betriebs-Druckluftvorrat 227 verbunden, der unabhängig vom zweiten Betriebs-Druckluftvorrat 226 ist, sodass der weitere zweite Betriebs-Druckluftvorrat 227 auch dann Vorratsdruck pV bereitstellen kann, wenn der zweite Betriebs-Druckluftvorrat 226 beispielsweise ausgefallen ist. In anderen Ausführungsformen kann aber auch der Redundanz-Achsmodulator 142 mit dem zweiten Betriebs-Druckluftvorrat 226 oder dem ersten Betriebs-Druckluftvorrat 224 verbunden sein.

Der Redundanz-Achsmodulator 142 steuert in Abhängigkeit von den Redundanzbremssignalen SR einen Redundanzbremsdruck p2 an einem ersten Redundanzbremsdruckausgang 146a und einem zweiten Redundanzbremsdruckausgang 146b aus. Der am ersten Redundanzbremsdruckausgang 146a ausgesteuerte Redundanzbremsdruck p2 wird dem Redundanzbremsdruckanschluss 6 der Redundanzventilanordnung 1 bereitgestellt. Der an dem zweiten Redundanzbremsdruckausgang 146b ausgesteuerte Redundanzbremsdruck wird der zweiten Redundanzventilanordnung 1b an der linken Seite der Vorderachse VA bereitgestellt. Der Redundanz-Achsmodulator 142 ist wiederum als Einkanalachsmodulator ausgebildet und die ersten und zweiten Redundanzbremsdruckausgänge 146a, 146b sind zwar in Fig. 4 getrennt dargestellt, können aber auch als ein Ausgang ausgebildet sein. In anderen, hier nicht gezeigten Ausführungsformen ist der Redundanz-Achsmodulator 142 als Zweikanalachsmodulator ausgebildet und kann insofern eine seitengerechte Aussteuerung von Redundanzbremsdrücken realisieren.

Die Redundanzventilanordnung 1 ist mit der Redundanz-Steuereinheit 140 verbunden, und empfängt die ersten und zweiten Schaltsignale S1, S2 von dieser. Auf diese Weise kann die Redundanzventilanordnung 1 durch die Redundanz-Steuereinheit 140 so angesteuert werden, dass der Redundanzbremsdruck p2, der an dem Redundanzbremsdruckanschluss 6 ausgesteuert ist, durchgesteuert wird und an dem den ersten Betriebsbremsaktuator 207 bereitgestellt wird. Wie in Fig. 4 zu sehen, ist die Redundanz-Steuereinheit 140 zusätzlich mit dem ersten Raddrehzahlsensor 209 verbunden, empfängt somit auch die ersten Raddrehzahlsignale SD. Insofern ist es auch bevorzugt, dass die Redundanz-Steuereinheit 140 die ersten und zweiten Schaltsignale S1, S2 in Abhängigkeit von den ersten Raddrehzahlsignalen SD aussteuert, um so eine Schlupfregelung bzw. ABS-Modulation des Redundanzbremsdrucks p2 zu ermöglichen. Dieselben Ausführungen gelten auch für die weitere Redundanzventilanordnung 1b an der linken Fahrzeugseite. Die Redundanz-Steuereinheit 140 ist auch mit dem zweiten Raddrehzahlsensor 209 verbunden und der Redundanzbremsdruck p2 kann über die zweite Redundanzventilanordnung 1b den zweiten Betriebsbremsaktuator 208b bereitgestellt werden.

Um nun auch die erste und zweite Hinterachse HA1, HA2 des Fahrzeugs 200 redundant bremsen zu können, umfasst das elektronisch steuerbare pneumatische Bremssystem 204 in der Redundanzebenen B2 auch einen zweiten Redundanz-Achsmodulator 144, der dazu vorgesehen ist, den zweiten Betriebs-Achsmodulator 114 zu ersetzen. Der zweite Redundanz-Achsmodulator 144 ist in dem hier gezeigten Ausführungsbeispiel (Fig. 4) mit der Redundanz-Steuereinheit 140 in ein Redundanzmodul 141 integriert, ähnlich, wie dies oben mit Bezug auf das Zentralmodul 116 beschrieben wurde. Die Redundanz-Steuereinheit 140 stellt insofern auch zweite und dritte Redundanzbremssignale SR2, SR3 an dem Redundanz-Achsmodulator 144 bereit. Der zweite Redundanz-Achsmodulator 144 ist mit einem weiteren ersten Betriebs-Druckluftvorrat 225 verbunden und empfängt Vorratsdruck pV von diesem. Der erste Betriebs-Druckluftvorrat 224 und der weitere erste Betriebs-Druckluftvorrat 225 sind unabhängig voneinander, sodass ein Ausfall des ersten Betriebs-Druckluftvorrat 224 nicht dazu führt, dass der zweite Redundanz-Achsmodulator 144 nicht mehr mit Vorratsdruck pV versorgt wird. In anderen Ausführungsformen kann aber der zweite Redundanz-Achsmodulator 144 auch mit dem ersten Betriebs-Druckluftvorrat 224, dem zweiten Betriebs-Druckluftvorrat 226 oder dem weiteren zweiten Betriebs-Druckluftvorrat 227 verbunden sein, um Vorratsdruck pV zu empfangen.

Der zweite Redundanz-Achsmodulator 144 steuert einen zweiten Redundanzbremsdruck p4 für die zweite Achse A2 aus. Darüber hinaus steuert er einen dritten Redundanzbremsdruck p6 ebenfalls für die zweite Achse, hier die erste Hinterachse HA1 aus. Der zweite Redundanzbremsdruck p4 ist für die rechte Fahrzeugseite und der dritte Redundanzbremsdruck p6 für die linke Fahrzeugseite vorgesehen. Insofern ersetzt der zweite Redundanzbremsdruck p4 den zweiten Betriebsbremsdruck p3 und der dritte Redundanzbremsdruck p6 ersetzt den dritten Betriebsbremsdruck p5. Der zweite und der dritte Redundanzbremsdruck werden an entsprechenden Bremsdruckanschlüssen der vierten bis sechsten Redundanzventileinheiten 1c-1f bereitgestellt, in Übereinstimmung mit den vorstehend beschriebenen Ausführungsformen der Redundanzventileinheiten. Die Redundanz-Steuereinheit 140 empfängt auch die dritten bis sechsten Raddrehzahlsignale SD3-SD6 der dritten bis sechsten Raddrehzahlsensoren 209c-209f und steuert entsprechende erste und zweite Schaltsignale, im Folgenden S1c-S1f, S2c-S2f bezeichnet an den entsprechenden dritten bis vierten Redundanzventileinheiten 1c-1f aus. Die entsprechenden Bremsaktuatoranschlüsse (in Fig. 4 nicht mit Bezugszeichen versehen) der dritten bis vierten Redundanzventileinheiten 1c-1f sind dann ihrerseits mit den entsprechenden dritten bis vierten Betriebsbremsaktuatoren 208c-208f verbunden.

Die Entlüftung der Betriebsbremsaktuatoren 208a-208f kann wie vorstehend beschrieben über die entsprechenden Redundanzventileinheiten 1c-1f erfolgen.

Weiterhin ist dem elektronisch steuerbaren pneumatischen Bremssystem 204 eine zusätzliche Redundanzebene umgesetzt, die rein pneumatisch funktioniert, wie beispielsweise in EP 3 600 995 B1, in WO 2020/187569 A1, in WO 2020/182569 A1 oder DE 10 2019 106 274 A1 beschrieben.

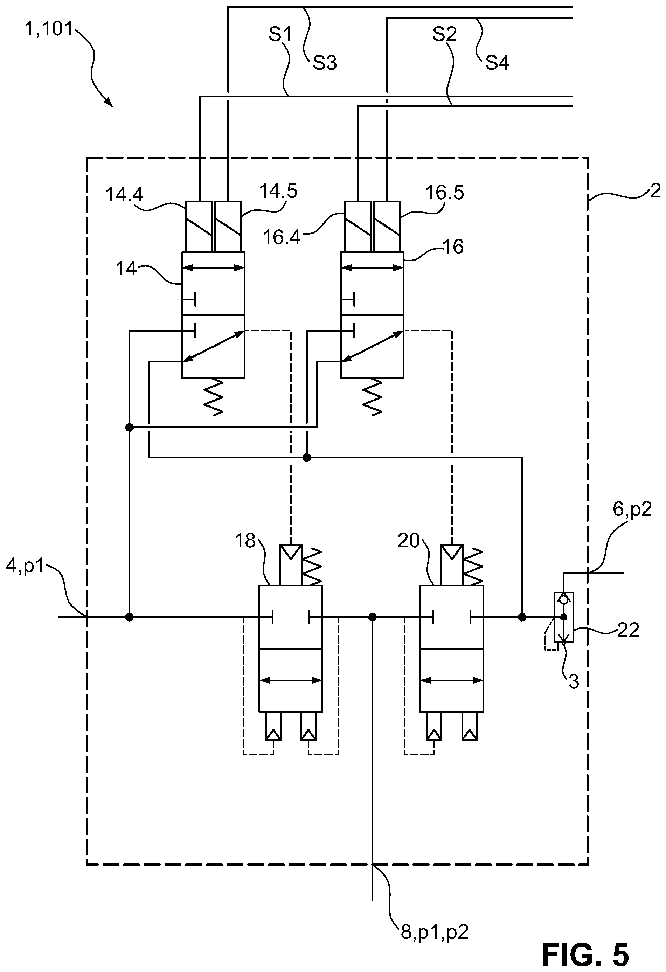

Fig. 5 zeigt nun eine alternative Ausführungsform zu der in Fig. 3 gezeigten Ausführungsform. Gleiche und ähnliche Elemente sind mit den gleichen Bezugszeichen versehen, sodass vollumfänglich auf die obige Beschreibung Bezug genommen wird. Nachfolgend werden insbesondere die Unterschiede zum Ausführungsbeispiel gemäß Fig. 3 hervorgehoben, sodass auf die Gemeinsamkeiten nicht weiter eingegangen wird.

Ein wesentlicher Unterschied in dem in Fig. 5 dargestellten Ausführungsbeispiel liegt darin, dass das erste und dritte Schaltsignal S1, S3 sowie das zweite und vierte Schaltsignal S2, S4 nicht an einem ersten Elektromagneten 14.4 des Betriebs-Vorsteuerventils bzw. eines einen zweiten Elektromagneten 16.4 des Redundanz-Vorsteuerventils 16 gemeinsam bereitgestellt werden, sondern in der Ausführungsform gemäß Fig. 5 weist das Betriebs-Vorsteuerventil 14 neben dem ersten Elektromagneten 14.4 auch einen dritten Elektromagneten 14.5 auf und das Redundanz-Vorsteuerventil 16 weist neben dem zweiten Elektromagneten 16.4 auch einen vierten Elektromagneten 16.5 auf. Das erste Schaltsignal S1 wird nur an dem ersten Elektromagneten 14.4 bereitgestellt, das zweite Schaltsignal S2 wird nur an dem zweiten Elektromagneten 16.4 bereitgestellt, das dritte Schaltsignal S3 wird nur an dem dritten Elektromagneten 14.5 bereitgestellt und das vierte Schaltsignal S4 wird nur an dem vierten Elektromagneten 16.5 bereitgestellt.

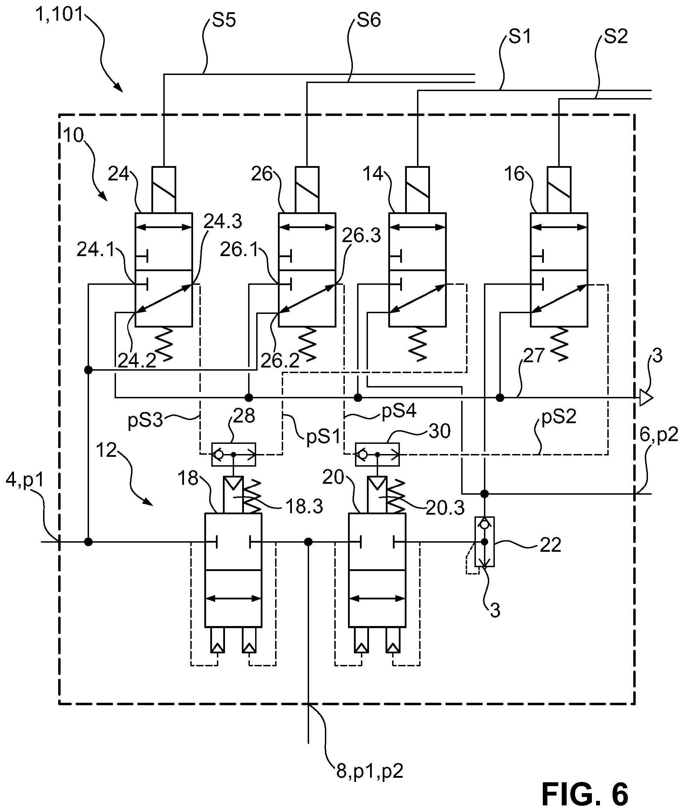

Fig. 6 zeigt ein weiteres alternatives Ausführungsbeispiel, das im Grunde ebenfalls auf den Ausführungsbeispielen der Figuren 2, 3 und 5 basiert. In dem in Fig. 6 gezeigten Ausführungsbeispiel sind wiederum gleiche und ähnliche Elemente mit den gleichen Bezugszeichen versehen, sodass vollumfänglich auf die obige Beschreibung Bezug genommen wird. Im Folgenden werden insbesondere die Unterschiede zu den vorherigen Ausführungsbeispielen beschrieben, während Gemeinsamkeiten nicht weiter hervorgehoben werden.

Ein wesentlicher Unterschied zum Ausführungsbeispiel gemäß Fig. 5 liegt darin, dass nicht nur die Elektromagnete aufgedoppelt sind, sondern dass die Magnetventileinheit 10 aufgedoppelte Vorsteuerventile umfasst. Neben dem Betriebs-Vorsteuerventil 14 und dem Redundanz-Vorsteuerventil 16 umfasst das hier gezeigte Ausführungsbeispiel (Fig. 6) auch ein Einlass-Vorsteuerventil 24 und ein Auslass-Vorsteuerventil 26. Das Einlass-Vorsteuerventil 24 ist als monostabiles 3/2-Wege-Magnetventil ausgebildet mit einem ersten Einlass-Vorsteuerventilanschluss 24.1, der mit dem Betriebsbremsdruckanschluss 4 verbunden und den Betriebsbremsdruck p1 von diesem empfängt. Ein zweiter Einlass-Vorsteuerventilanschluss 24.2 ist über einen hier separat vorgesehenen Entlüftungspfad 28 mit einer oder der Entlüftung 3 verbunden und ein dritter Einlass-Vorsteuerventilanschluss 24.3 ist mit der Hauptventileinheit verbunden. In einer ersten in Fig. 6 gezeigten Schaltstellung ist der zweite mit dem dritten Einlass-Vorsteuerventilanschluss verbunden und in einer zweiten, in Fig. 6 nicht gezeigten Schaltstellung, ist der erste mit dem dritten Einlass-Vorsteuerventilanschluss 24.1, 24.3 verbunden, sodass am dritten Einlass-Vorsteuerventilanschluss 24.3 ein dritter Steuerdruck pS3 ausgesteuert wird, der dem Betriebsbremsdruck p1 oder einem davon abgeleiteten Druck entsprechen kann. Das Schalten des Einlass-Vorsteuerventils 24 von der ersten in die zweite Schaltstellung wird durch ein fünftes Schaltsignal S5 bewirkt, welches vorzugsweise von der Betriebs-Steuereinheit 110 bereitgestellt wird.

Um den ersten und den dritten Steuerdruck pS1, pS3 an der Hauptventileinheit 12, genauer gesagt an dem Betriebs-Hauptventil 18 und dort an dem Betriebs-Steueranschluss 18.3 auszusteuern, ist ein erstes Wechselventil 28 vorgesehen, welches jeweils dem höheren des ersten und des dritten Steuerdrucks pS1, pS3 an den Betriebs-Steueranschluss 18.3 aussteuert. Die Entlüftung des ersten Steuerdrucks pS1 erfolgt in dem hier gezeigten Ausführungsbeispiel auch durch den separaten Entlüftungspfad 27, könnte aber auch ebenso über das Schnellentlüftungsventil 22 erfolgen.

Zudem ist das Auslass-Vorsteuerventil 26 ebenfalls als monostabiles 3/2-Wege-Magnetventil ausgebildet, mit einem ersten Auslass-Vorsteuerventilanschluss 26.1, der hier mit dem separaten Entlüftungspfad 27 und somit mit der Entlüftung 3 verbunden ist, einem zweiten Auslass-Vorsteuerventilanschluss 26.2, der mit dem Betriebsbremsdruckanschluss 4 verbunden ist und Betriebsbremsdruck p1 empfängt und einem dritten Auslass-Vorsteuerventilanschluss 26.3, der mit der Hauptventileinheit 12 verbunden ist. In der ersten monostabilen in Fig. 6 gezeigten Schaltstellung ist der zweite mit dem dritten Auslass-Vorsteuerventilanschluss verbunden und in der zweiten, in Fig. 6 nicht gezeigten Schaltstellung, ist der erste mit dem dritten Auslass-Vorsteuerventilanschluss 26.1, 26.3 verbunden, sodass in diesem Schaltzustand der vierte Steuerdruck pS4 ausgesteuert wird, der den Betriebsbremsdruck p1 oder einem davon abgeleiteten Druck entsprechen kann. Das Auslass-Vorsteuerventil 26 wird durch ein sechstes Schaltsignal S6 von der ersten in die zweite Schaltstellung geschaltet, welches vorzugsweise von der Betriebs-Steuereinheit 110 bereitgestellt wird. Wiederum ist zum Zusammenführen des vierten und des zweiten Steuerdrucks pS2, pS4 ein zweites Wechselventil 30 vorgesehen, welches jeweils den höheren des zweiten und vierten Steuerdrucks pS2, pS4 an der Hauptventileinheit 12, in dem hier gezeigten Ausführungsbespiel genauer an dem Redundanz-Hauptventil 20, nämlich an dem Redundanz-Steueranschluss 20.3 des Redundanz-Hauptventils 20, aussteuert. Auch die Entlüftung des zweiten Steuerdrucks pS2 erfolgt hier anders als in den vorherigen Ausführungsbeispielen über den separaten Entlüftungspfad 27, könnte aber auch nach wie vor über das Schnellentlüftungsventil 22 erfolgen. Durch das in Fig. 6 gezeigte Ausführungsbeispiel ist eine Redundanz auch in den Ventilen erreicht, während in einem in Fig. 5 gezeigten Ausführungsbeispiel nur eine Redundanz in den sechs Magneten erreicht ist.

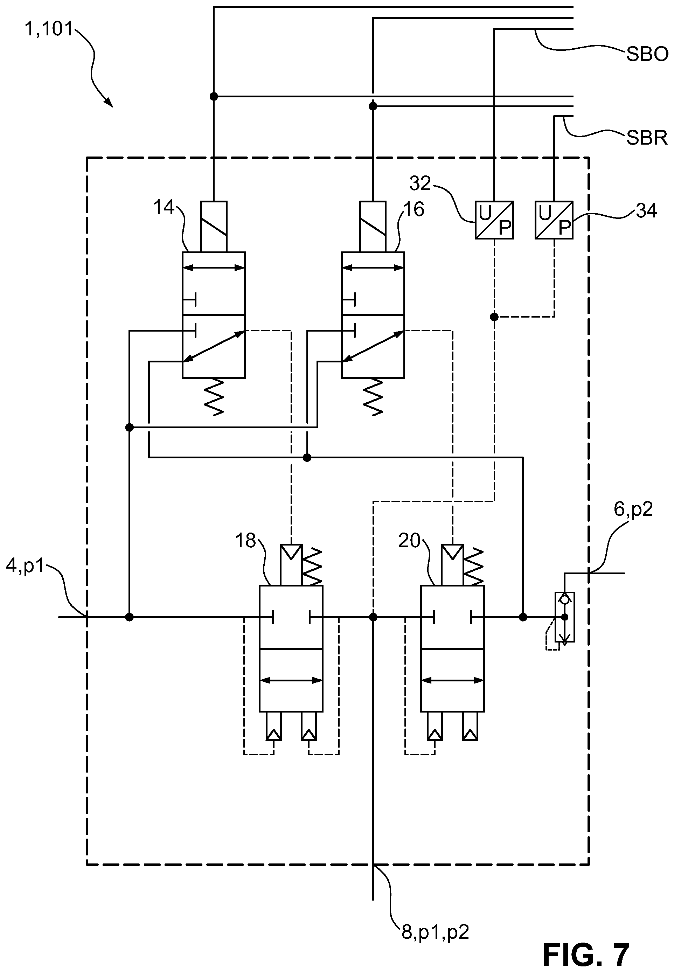

Fig. 7 illustriert schließlich allgemein das Vorsehen von wenigstens einem Drucksensor 32, der den am Bremsaktuatoranschluss 8 ausgesteuerten Druck erfasst. Der Drucksensor 32 stellt ein Bremsdrucksignal SBD bereit, vorzugsweise wenigstens eine Betriebs-Steuereinheit 110. Der Drucksensor 32 kann auch beispielsweise über eine Y-Verkabelung mit der Redundanz-Steuereinheit 140 verbunden sein und das Bremsdrucksignal SBD ebenfalls an diesem bereitstellen. In dem in Fig. 7 gezeigten Ausführungsbeispiel ist stattdessen aber ein redundanter Drucksensor 34 vorgesehen, der ebenfalls den am Bremsaktuatoranschluss 8 ausgesteuerten Druck erfasst und ein redundantes Drucksignal SBR bereitstellt. Das redundante Bremsdrucksignal SBR wird vorzugsweise wenigstens an der Redundanz-Steuereinheit 140 bereitgestellt, kann aber zusätzlich oder alternativ auch an der Betriebs-Steuereinheit 110 bereitgestellt werden. Hierdurch ist eine umfassende Redundanz geschaffen.

### BEZUGSZEICHENLISTE (TEIL DER BESCHREIBUNG)

- 1: Redundanzventilanordnung
- 1b-1f: zweite bis sechste Redundanzventilanordnung
- 2: Redundanzventilmodulgehäuse
- 4: Betriebsbremsdruckanschluss
- 6: Redundanzbremsdruckanschluss
- 8: Bremsaktuatoranschluss
- 10: Magnetventileinheit
- 12: Hauptventileinheit
- 14: Betriebs-Vorsteuerventil
- 14.1: ersten Betriebs-Vorsteuerventilanschluss
- 14.2: zweiter Betriebs-Vorsteuerventilanschluss
- 14.3: dritter Betriebs-Vorsteuerventilanschluss
- 14.4: erster Elektromagnet
- 14.5: dritter Elektromagnet
- 16: Redundanz-Vorsteuerventil
- 16.1: erster Redundanz-Vorsteuerventilanschluss
- 16.2: zweiter Redundanz-Vorsteuerventilanschluss
- 16.3: dritter Redundanz-Vorsteuerventilanschluss
- 16.4: zweiter Elektromagnet
- 16.5: vierter Elektromagnet
- 18: Betriebs-Hauptventil
- 18.1: erster Betriebs-Hauptventilanschluss
- 18.2: zweiter Betriebs-Hauptventilanschluss
- 18.3: Betriebs-Steueranschluss
- 18.4: erster Betriebs-Rückführanschluss
- 18.5: zweiter Betriebs-Rückführanschluss
- 18A: Sperrstellung des Betriebs-Hauptventils
- 18B: Durchlassstellung des Betriebs-Hauptventils
- 20: Redundanz-Hauptventil
- 20.1: erster Redundanz-Hauptventilanschluss
- 20.2: zweiter Redundanz-Hauptventilanschluss
- 20.3: Redundanz-Steueranschluss
- 20.4: erster Redundanz-Rückführanschluss
- 20.5: zweiter Redundanz-Rückführanschluss
- 20A: Sperrstellung des Redundanz-Hauptventils
- 20B: Durchlassstellung des Redundanz-Hauptventils
- 22: Schnellentlüftungsventil
- 22.1: erster Schnellentlüftungsventilanschluss
- 22.2: zweiter Schnellentlüftungsventilanschluss
- 22.3: dritter Schnellentlüftungsventilanschluss
- 24: Einlass-Vorsteuerventil
- 24.1: erster Einlass-Vorsteuerventilanschluss
- 24.2: zweiter Einlass-Vorsteuerventilanschluss
- 24.3: dritter Einlass-Vorsteuerventilanschluss
- 26: Auslass-Vorsteuerventil
- 26.1: erster Auslass-Vorsteuerventilanschluss
- 26.2: zweiter Auslass-Vorsteuerventilanschluss
- 26.3: dritter Auslass-Vorsteuerventilanschluss
- 27: separater Entlüftungspfad
- 28: erstes Wechselventil
- 30: zweites Wechselventil
- 32: Drucksensor
- 34: redundanter Drucksensor
- 40: Betriebsbremsdruckpfad
- 42: Entlüftungspfad
- 100: ABS-Ventil
- 101: Redundanzventileinheit als ABS-Ventil ausgebildet
- 102: Bremsmodulatoranschluss
- 104: ABS-Vorsteuereinheit
- 106: ABS-Hauptventileinheit
- 110: Betriebs-Steuereinheit
- 112: erster Betriebs-Achsmodulator
- 113: Vorderachsmodulator
- 114: zweiter Betriebs-Achsmodulator
- 115: Hinterachsmodulator
- 116: Zentralmodul
- 120: erster Vorratsanschluss
- 122a: erster Betriebsbremsdruckausgang
- 122b: zweiter Betriebsbremsdruckausgang
- 124: ABS-Einlassventil
- 126: ABS-Auslassventil
- 128: ABS-Einlassvorsteuerventil
- 130: ABS-Auslassvorsteuerventil
- 140: Redundanz-Steuereinheit
- 141: Redundanzmodul
- 142: Redundanz-Achsmodulator
- 144: zweiter Redundanz-Achsmodulator
- 146a: erster Redundanzbremsdruckausgang
- 146b: zweiter Redundanzbremsdruckausgang
- 200: Fahrzeug
- 202: Nutzfahrzeug
- 204: Elektronisch steuerbares pneumatisches Bremssystem
- 207: erster Betriebsbremsaktuator
- 208a-208f: erster bis sechster Betriebsbremsaktuator
- 209: erster Raddrehzahlsensor
- 209b-209f: zweiter bis sechster Raddrehzahlsensor
- 220: Hinterachsbremskreis
- 222: Vorderachsbremskreis
- 224: erster Betriebs-Druckluftvorrat
- 225: weiterer erster Betriebs-Druckluftvorrat
- 226: zweiter Betriebs-Druckluftvorrat
- 227: weiterer zweiter Betriebs-Druckluftvorrat
- 228: Fahrzeug-BUS
- 230: Einheit für autonomes Fahren
- 232: erste Versorgungsleitung
- 234: erste Spannungsquelle
- 236: zweite Versorgungsleitung
- 238: zweite Spannungsquelle
- 240: Redundanz-BUS
- A1: erste Achse
- A2: zweite Achse
- B1: Betriebsebene
- B2: erste Redundanzebene
- HA1: erste Hinterachse
- HA2: zweite Hinterachse
- p1: Betriebsbremsdruck
- p1ABS: ABS-modulierter Betriebsbremsdruck
- p2: Redundanzbremsdruck
- p3: zweiter Betriebsbremsdruck
- p4: zweiter Redundanzbremsdruck
- p5: dritter Betriebsbremsdruck
- p6: dritter Redundanzbremsdruck
- pS1: erster Steuerdruck
- pS2: zweiter Steuerdruck
- pS3: dritter Steuerdruck
- pS4: vierter Steuerdruck
- pV: Vorratsdruck
- S1: erstes Schaltsignal
- S2: zweites Schaltsignal
- S3: drittes Schaltsignal
- S4: viertes Schaltsignal
- S3b: drittes Schaltsignal für zweite Redundanzventilanordnung
- S4b: viertes Schaltsignal für zweite Redundanzventilanordnung
- SA: Bremsanforderungssignale
- SB: Betriebs-Bremssignale
- SB2: zweite Betriebs-Bremssignale
- SB3: dritte Betriebs-Bremssignale
- SBD: Bremsdrucksignal
- SBR: redundantes Bremsdrucksignal
- SD: erste Raddrehzahlsignale
- SD2-SD6: zweite bis sechste Raddrehzahlsignale
- SR: Redundanzbremssignale
- SR2: zweite Redundanzbremssignale
- SR3: dritte Redundanzbremssignale
- VA: Vorderachse

## Patentansprüche

1. Redundanzventilanordnung (1) zur redundanten Einspeisung eines redundanten Bremsdrucks (p2) in einen Betriebsbremsdruckpfad (40) eines elektronisch steuerbaren pneumatischen Bremssystems (204) für ein Fahrzeug (200), vorzugsweise Nutzfahrzeug (200), aufweisend:
einen Betriebsbremsdruckanschluss (4) zum Empfangen eines Betriebsbremsdrucks (p1) von einem Betriebsbremsdruckmodulator (112);
einen Redundanzbremsdruckanschluss (6) zum Empfangen eines Redundanzbremsdrucks (p2) von einem Redundanzbremsdruckmodulator (142); und
einen Bremsaktuatoranschluss (8) zum Anschließen wenigstens eines Bremsaktuators (207);
wobei die Redundanzventilanordnung (1) elektrisch ansteuerbar ist, um wahlweise den Betriebsbremsdruck (p1) oder den Redundanzbremsdruck (p2) an dem Bremsaktuatoranschluss (8) auszusteuern; und
eine Magnetventileinheit (10), die wenigstens mit dem Betriebsbremsdruckanschluss (4) und dem Redundanzbremsdruckanschluss (6) verbunden ist, und durch wenigstens ein erstes Schaltsignal (S1) schaltbar ist, wobei in Abhängigkeit wenigstens vom ersten Schaltsignal (S1) der Betriebsbremsdruck (p1) oder der Redundanzbremsdruck (p2) an dem Bremsaktuatoranschluss (8) ausgesteuert wird, **dadurch gekennzeichnet, dass**
die Magnetventileinheit (10) ein elektromagnetisches Betriebs-Vorsteuerventil (14) und ein elektromagnetisches Redundanz-Vorsteuerventil (16) aufweist, wobei das Betriebs-Vorsteuerventil (14) durch das erste Schaltsignal (S1) schaltbar ist und einen ersten Vorsteuerdruck (pS1) bereitstellt, und das Redundanz-Vorsteuerventil (16) durch ein zweites Schaltsignal (S2) schaltbar ist und einen zweiten Vorsteuerdruck (pS2) bereitstellt.

2. Redundanzventilanordnung (1) nach Anspruch 1, aufweisend eine Hauptventileinheit (12), die mit dem Betriebsbremsdruckanschluss (4), dem Redundanzbremsdruckanschluss (6) und dem Bremsaktuatoranschluss (8) zum wahlweisen Aussperren des Betriebsbremsdrucks (p1) oder des Redundanzbremsdrucks (p2) verbunden ist.

3. Redundanzventilanordnung (1) nach Anspruch 1 und 2, wobei die Hauptventileinheit (12) ein Betriebs-Hauptventil (18) aufweist, welches einen mit dem Betriebsbremsdruckanschluss (4) verbundenen ersten Betriebs-Hauptventilanschluss (18.1) und einen mit dem Bremsaktuatoranschluss (8) verbundenen zweiten Betriebs-Hauptventilanschluss (18.2) aufweist, wobei das Betriebs-Hauptventil (18) in einer Sperrstellung (18A) den ersten Betriebs-Hauptventilanschluss (18.1) und den zweiten Betriebs-Hauptventilanschluss (18.2) trennt und in einer Durchlassstellung (18B) den ersten Betriebs-Hauptventilanschluss (18.1) und den zweiten Betriebs-Hauptventilanschluss (18.2) druckfluidisch verbindet.

4. Redundanzventilanordnung (1) nach Anspruch 1 und nach Anspruch 2 oder 3, wobei die Hauptventileinheit (12) ein Redundanz-Hauptventil (20) aufweist, welches einen mit dem Redundanzbremsdruckanschluss (6) verbundenen ersten Redundanz-Hauptventilanschluss (20.1) und einen mit dem Bremsaktuatoranschluss (8) verbundenen zweiten Redundanz-Hauptventilanschluss (20.2) aufweist, wobei das Redundanz-Hauptventil (20) in einer Sperrstellung (20A) den ersten Redundanz-Hauptventilanschluss (20.1) und den zweiten Redundanz-Hauptventilanschluss (20.2) trennt und in einer Durchlassstellung (20B) den ersten Redundanz-Hauptventilanschluss (20.1) und den zweiten Redundanz-Hauptventilanschluss (20.2) druckfluidisch verbindet.

5. Redundanzventilanordnung (1) nach Anspruch 1 und 3, wobei das Betriebs-Hauptventil (18) pneumatisch schaltbar ist und einen Betriebs-Steueranschluss (18.3) aufweist, der zum Empfangen des ersten Vorsteuerdrucks (pS1) mit der Magnetventileinheit (10) verbunden ist, wobei das Betriebs-Hauptventil (18) in die Sperrstellung (18A) federbelastet vorgespannt ist.

6. Redundanzventilanordnung (1) nach Anspruch 1 und 4, wobei das Redundanz-Hauptventil (20) pneumatisch schaltbar ist und einen Redundanz-Steueranschluss (20.3) aufweist, der zum Empfangen des zweiten Vorsteuerdrucks (pS2) mit der Magnetventileinheit (10) verbunden ist, wobei das Redundanz-Hauptventil (20) in die Sperrstellung (20A) federbelastet vorgespannt ist.

7. Redundanzventilanordnung (1) nach Anspruch 1, wobei das erste Schaltsignal (S1) und das zweite Schaltsignal (S2) von einer Redundanz-Steuereinheit (140) bereitgestellt werden.

8. Redundanzventilanordnung (1) nach einem der vorstehenden Ansprüche, wobei dem Betriebsbremsdruckanschluss (4) ein ABS-Ventil (100) vorgeschaltet ist, sodass dem Betriebsbremsdruckanschluss (4) ein ABS-modulierter Betriebsbremsdruck (p1) bereitgestellt wird.

9. Redundanzventilanordnung (1) nach einem der vorstehenden Ansprüche 1 bis 7, wobei die Redundanzventilanordnung (1) als ABS-Ventil (101) ausgebildet und dazu vorgesehen ist, den am Betriebsbremsdruckanschluss (4) empfangenen Betriebsbremsdruck (p1) ABS-moduliert an dem Bremsaktuatoranschluss (8) auszusteuern.

10. Redundanzventilanordnung (1) nach einem der vorstehenden Ansprüche, umfassend ein Schnellentlüftungsventil (22) zum Entlüften des am Bremsaktuatoranschluss (8) ausgesteuerten Drucks (p1, p2).

11. Redundanzventilanordnung (1) nach Anspruch 10, wobei das Schnellentlüftungsventil (22) mit dem Redundanzbremsdruckanschluss (6) derart verbunden ist, dass über das Schnellentlüftungsventil (22) wahlweise der Redundanzbremsdruck (p2) einsteuerbar und der Bremsaktuatoranschluss (8) entlüftbar ist, wobei das Schnellentlüftungsventil (22) vorzugsweise einen mit dem Redundanzbremsdruckanschluss (6) verbundenen ersten Schnellentlüftungsventilanschluss (22.1), einen mit der Hauptventileinheit (12) verbundenen zweiten Schnellentlüftungsventilanschluss (22.2) und einen mit einer Entlüftung (3) verbundenen dritten Schnellentlüftungsventilanschluss (22.3) aufweist.

12. Redundanzventilanordnung (1) nach Anspruch 7, wobei das Betriebs-Vorsteuerventil (14) durch ein drittes Schaltsignal (S3) und das Redundanz-Vorsteuerventil (16) durch ein viertes Schaltsignal (S4) schaltbar ist, die von einer Betriebs-Steuereinheit (110) bereitgestellt werden.

13. Redundanzventilanordnung (1) nach Anspruch 1, wobei die Magnetventileinheit (10) ein elektromagnetisches Einlass-Vorsteuerventil (24) und ein elektromagnetisches Auslass-Vorsteuerventil (26) aufweist, wobei das Einlass-Vorsteuerventil (24) durch ein Einlass-Schaltsignal (S5) schaltbar ist und einen dritten Vorsteuerdruck (pS3) bereitstellt, und das Auslass-Vorsteuerventil (26) durch ein Auslass-Schaltsignal (S6) schaltbar ist und einen vierten Vorsteuerdruck (pS4) bereitstellt, wobei vorzugsweise das Einlass-Schaltsignal (S5) und das Auslass-Schaltsignal (S6) von einer Betriebs-Steuereinheit (110) bereitgestellt werden.

14. Redundanzventilanordnung (1) nach Anspruch 13, wobei der erste Vorsteuerdruck (pS1) und der dritte Vorsteuerdruck (pS3) über ein erstes Wechselventil (28) an der Hauptventileinheit (12) ausgesteuert werden können, und wobei der zweite Vorsteuerdruck (pS2) und der vierte Vorsteuerdruck (pS4) über ein zweites Wechselventil (30) an der Hauptventileinheit (12) ausgesteuert werden können.

15. Redundanzventilanordnung (1) nach einem der vorstehenden Ansprüche, aufweisend einen Drucksensor (32) zum Erfassen eines am Bremsaktuatoranschluss (8) ausgesteuerten Drucks (p1, p2).

16. Elektronisch steuerbares pneumatisches Bremssystem (204) für ein Fahrzeug (200), vorzugsweise Nutzfahrzeug (202), mit
einer Betriebs-Steuereinheit (110) zum Steuern des elektronisch steuerbaren pneumatischen Bremssystems (204) in einem Betriebsfall,
wenigstens einem Betriebs-Achsmodulator (112), der mit der Betriebs-Steuereinheit (110) verbunden ist und von der Betriebs-Steuereinheit (110) Betriebs-Bremssignale (SB) empfängt und basierend hierauf einen Betriebsbremsdruck (p1) für eine erste Achse (A1) aussteuert;
einer Redundanz-Steuereinheit (140) zum Steuern des elektronisch steuerbaren pneumatischen Bremssystems (204) in einem Redundanzfall,
wenigstens einem Redundanz-Achsmodulator (142), der mit der Redundanz-Steuereinheit (140) verbunden ist und von der Redundanz-Steuereinheit (140) Redundanz-Bremssignale (SR) empfängt und basierend hierauf einen Redundanzbremsdruck (p2) für die erste Achse (A1) aussteuert; und
wenigstens eine Redundanzventilanordnung (1) nach einem der Ansprüche 1 bis 15, wobei der Betriebsbremsdruckanschluss (4) mit dem Betriebs-Achsmodulator (112) verbunden ist und von dem Betriebs-Achsmodulator (112) den Betriebsbremsdruck (p1) empfängt, und der Redundanzbremsdruckanschluss (6) mit dem Redundanz-Achsmodulator (142) verbunden ist und von dem Redundanz-Achsmodulator (142) den Redundanzbremsdruck (p2) empfängt, und wobei der Bremsaktuatoranschluss (8) mit wenigstens einem ersten Betriebsbremsaktuator (207) an der ersten Achse (A1) verbunden ist.

17. Elektronisch steuerbares pneumatisches Bremssystem (204) nach Anspruch 16, wobei die wenigstens eine Redundanzventilanordnung (1) mit der Redundanz-Steuereinheit (140) verbunden ist und von dieser das erste Schaltsignal (S1) und das zweite Schaltsignal (S2) empfängt.

18. Elektronisch steuerbares pneumatisches Bremssystem (204) nach Anspruch 16 oder 17, wobei die wenigstens eine Redundanzventilanordnung (1) mit der Betriebs-Steuereinheit (110) verbunden ist und von dieser das dritte Schaltsignal (S3) und das vierte Schaltsignal (S4) und/oder das Einlass-Schaltsignal (S5) und das Auslass-Schaltsignal (S6) empfängt.

19. Elektronisch steuerbares pneumatisches Bremssystem (204) nach einem der Ansprüche 16 bis 18, umfassend wenigstens einen ersten Raddrehzahlsensor (209) an der ersten Achse (A1), welcher sowohl mit der Betriebs-Steuereinheit (110) als auch der Redundanz-Steuereinheit (140) verbunden ist und an der Betriebs-Steuereinheit (110) und der Redundanz-Steuereinheit (140) ein erstes Raddrehzahlsignal (SD) bereitstellt.

20. Elektronisch steuerbares pneumatisches Bremssystem (204) nach Anspruch 17 und 19, wobei das erste Schaltsignal (S1) und das zweite Schaltsignal (S2) von der Redundanz-Steuereinheit (140) basierend auf dem ersten Raddrehzahlsignal (SD) erzeugt und bereitgestellt werden.

21. Elektronisch steuerbares pneumatisches Bremssystem (204) nach einem der Ansprüche 16 bis 20, wobei die Redundanzventilanordnung (1) an dem ersten Betriebsbremsaktuator (207) angeordnet oder benachbart zu dem ersten Betriebsbremsaktuator (207) verbaut ist.

22. Elektronisch steuerbares pneumatisches Bremssystem (204) nach einem der Ansprüche 16 bis 21, wobei wenigstens eine Redundanzventilanordnung (1) gemäß einem der Ansprüche 1 bis 17 an jeder Achse des Fahrzeugs (200) vorgesehen ist, vorzugsweise an jedem Betriebsbremsaktuator (208a-208f) vorgesehen.

23. Elektronisch steuerbares pneumatisches Bremssystem (204) nach einem der Ansprüche 16 bis 22, aufweisend
eine zweite Redundanzventilanordnung (1b) nach einem der Ansprüche 1 bis 15, wobei der Betriebsbremsdruckanschluss (4) der zweiten Redundanzventilanordnung (1b) mit dem Betriebs-Achsmodulator (112) verbunden ist und von dem Betriebs-Achsmodulator (112) den Betriebsbremsdruck (p1) empfängt, und der Redundanzbremsdruckanschluss (6) der zweiten Redundanzventilanordnung (1b) mit dem Redundanz-Achsmodulator (142) verbunden ist und von dem Redundanz-Achsmodulator (142) den Redundanzbremsdruck (p2) empfängt, und wobei der Bremsaktuatoranschluss (8) der zweiten Redundanzventilanordnung (1b) mit wenigstens einem zweiten Betriebsbremsaktuator (208b) an der ersten Achse (A1) verbunden ist.

24. Elektronisch steuerbares pneumatisches Bremssystem (204) nach einem der Ansprüche 16 bis 23, aufweisend
wenigstens einen zweiten Betriebs-Achsmodulator (114), der mit der Betriebs-Steuereinheit (110) verbunden ist und von der Betriebs-Steuereinheit (110) Betriebs-Bremssignale (SB) empfängt und basierend hierauf einen zweiten Betriebsbremsdruck (p3) für eine zweite Achse (A2) aussteuert;
wenigstens einen zweiten Redundanz-Achsmodulator (144), der mit der Redundanz-Steuereinheit (140) verbunden ist und von der Redundanz-Steuereinheit (140) Redundanz-Bremssignale (SR) empfängt und basierend hierauf einen zweiten Redundanzbremsdruck (p4) für die zweite Achse (A2) aussteuert; und
wenigstens eine dritte Redundanzventilanordnung (1c) nach einem der Ansprüche 1 bis 17, wobei der Betriebsbremsdruckanschluss (4) der dritten Redundanzventilanordnung (1c) mit dem zweiten Betriebs-Achsmodulator (114) verbunden ist und von dem zweiten Betriebs-Achsmodulator (114) den zweiten Betriebsbremsdruck (p3) empfängt, und der Redundanzbremsdruckanschluss (6) der dritten Redundanzventilanordnung (1c) mit dem zweiten Redundanz-Achsmodulator (144) verbunden ist und von dem zweiten Redundanz-Achsmodulator (144) den zweiten Redundanzbremsdruck (p4) empfängt, und wobei der Bremsaktuatoranschluss (8) der dritten Redundanzventilanordnung (1c) mit wenigstens einem dritten Betriebsbremsaktuator (208c) an der zweiten Achse (A2) verbunden ist.

25. Fahrzeug (200), vorzugsweise Nutzfahrzeug (202), umfassend wenigstens eine erste Achse (A1) und eine zweite Achse (A2) sowie ein elektronisch steuerbares pneumatisches Bremssystem (204) nach einem der Ansprüche 16 bis 24.

26. Verfahren zum Steuern eines elektronisch steuerbaren pneumatischen Bremssystems (204) nach einem der Ansprüche 16 bis 24, umfassend die Schritte,
in einem Betriebsfall des elektronisch steuerbaren pneumatischen Bremssystems (204),
Aussteuern eines Betriebsbremsdrucks (p1) durch einen Betriebsbremsdruckmodulator (112) an einem Betriebsbremsdruckanschluss (4) einer Redundanzventilanordnung (1),
Ansteuern der Redundanzventilanordnung (1) durch eine Betriebs-Steuereinheit (110) basierend auf ersten Raddrehzahlsignalen (SD) und dadurch schlupfgeregeltes Aussteuern des Betriebsbremsdrucks (p1) an einem Bremsaktuatoranschluss (8) der Redundanzventilanordnung (1); und
in einem Redundanzfall (BZZ?) des elektronisch steuerbaren pneumatischen Bremssystems (204),
Aussteuern eines Redundanzbremsdrucks (p2) durch einen Redundanz-Achsmodulator (142) an einem Redundanzbremsdruckanschluss (6) der Redundanzventilanordnung (1),
Ansteuern der Redundanzventilanordnung (1) durch eine Redundanz-Steuereinheit (140) basierend auf den ersten Raddrehzahlsignalen (SD) und dadurch schlupfgeregeltes Aussteuern des Redundanzbremsdrucks (p2) an dem Bremsaktuatoranschluss (8).

## Claims

1. Redundancy valve assembly (1) for the redundant supply of a redundancy brake pressure (p2) into a service brake pressure path (40) of an electronically controllable pneumatic brake system (204) for a vehicle (200), preferably a commercial vehicle (200), comprising:
a service brake pressure connection (4) for receiving a service brake pressure (p1) from a service brake pressure modulator (112);
a redundancy brake pressure connection (6) for receiving a redundancy brake pressure (p2) from a redundancy brake pressure modulator (142); and
a brake actuator connection (8) for connecting at least one brake actuator (207);
the redundancy valve assembly (1) being electrically controllable in order to selectively adjust the service brake pressure (p1) or the redundancy brake pressure (p2) at the brake actuator connection (8); and
a solenoid valve unit (10) which is connected at least to the service brake pressure connection (4) and the redundancy brake pressure connection (6) and is switchable by at least one first switching signal (S1), the service brake pressure (p1) or the redundancy brake pressure (p2) being adjusted at the brake actuator connection (8) on the basis of at least the first switching signal (S1),
**characterized in that**
the solenoid valve unit (10) comprises an electromagnetic service pilot-control valve (14) and an electromagnetic redundancy pilot-control valve (16), the service pilot-control valve (14) being switchable by the first switching signal (S1) and providing a first pilot-control pressure (pS1), and the redundancy pilot-control valve (16) being switchable by a second switching signal (S2) and providing a second pilot-control pressure (pS2).

2. Redundancy valve assembly (1) according to claim 1, comprising a main valve unit (12) which is connected to the service brake pressure connection (4), the redundancy brake pressure connection (6), and the brake actuator connection (8) for selectively blocking the service brake pressure (p1) or the redundancy brake pressure (p2).

3. Redundancy valve assembly (1) according to claim 1 and claim 2, wherein the main valve unit (12) comprises a service main valve (18) which has a first service main valve connection (18.1) connected to the service brake pressure connection (4) and a second service main valve connection (18.2) connected to the brake actuator connection (8), wherein, in a blocking position (18A), the service main valve (18) separates the first service main valve connection (18.1) and the second service main valve connection (18.2) and, in a passage position (18B), connects the first service main valve connection (18.1) and the second service main valve connection (18.2) by pressurized fluid.

4. Redundancy valve assembly (1) according to claim 1 and according to claim 2 or claim 3, wherein the main valve unit (12) comprises a redundancy main valve (20) which has a first redundancy main valve connection (20.1) connected to the redundancy brake pressure connection (6) and a second redundancy main valve connection (20.2) connected to the brake actuator connection (8), wherein, in a blocking position (20A), the redundancy main valve (20) separates the first redundancy main valve connection (20.1) and the second redundancy main valve connection (20.2) and, in a passage position (20B), connects the first redundancy main valve connection (20.1) and the second redundancy main valve connection (20.2) by pressurized fluid.

5. Redundancy valve assembly (1) according to claim 1 and claim 3, wherein the service main valve (18) is pneumatically switchable and comprises a service control connection (18.3) which is connected to the solenoid valve unit (10) for receiving the first pilot-control pressure (pS1), wherein the service main valve (18) is spring-loaded into the blocking position (18A).

6. Redundancy valve assembly (1) according to claim 1 and claim 4, wherein the redundancy main valve (20) is pneumatically switchable and comprises a redundancy control connection (20.3) which is connected to the solenoid valve unit (10) for receiving the second pilot-control pressure (pS2), wherein the redundancy main valve (20) is spring-loaded into the blocking position (20A).

7. Redundancy valve assembly (1) according to claim 1, wherein the first switching signal (S1) and the second switching signal (S2) are provided by a redundancy control unit (140).

8. Redundancy valve assembly (1) according to any of the preceding claims, wherein an ABS valve (100) is connected upstream of the service brake pressure connection (4) so that an ABS-modulated service brake pressure (p1) is provided to the service brake pressure connection (4).

9. Redundancy valve assembly (1) according to any of the preceding claims 1 to 7, wherein the redundancy valve assembly (1) is designed as an ABS valve (101) and is provided to adjust the service brake pressure (p1) received at the service brake pressure connection (4) in an ABS-modulated manner at the brake actuator connection (8).

10. Redundancy valve assembly (1) according to any of the preceding claims, comprising a quick vent valve (22) for venting the pressure (p1, p2) adjusted at the brake actuator connection (8).

11. Redundancy valve assembly (1) according to claim 10, wherein the quick vent valve (22) is connected to the redundancy brake pressure connection (6) such that, via the quick vent valve (22), the redundancy brake pressure (p2) can be selectively introduced and the brake actuator connection (8) can be vented, wherein the quick vent valve (22) preferably comprises a first quick vent valve connection (22.1) connected to the redundancy brake pressure connection (6), a second quick vent valve connection (22.2) connected to the main valve unit (12), and a third quick vent valve connection (22.3) connected to a vent (3).

12. Redundancy valve assembly (1) according to claim 7, wherein the service pilot-control valve (14) is switchable by a third switching signal (S3) and the redundancy pilot-control valve (16) is switchable by a fourth switching signal (S4), which are provided by a service control unit (110).

13. Redundancy valve assembly (1) according to claim 1, wherein the solenoid valve unit (10) comprises an electromagnetic inlet pilot-control valve (24) and an electromagnetic outlet pilot-control valve (26), wherein the inlet pilot-control valve (24) is switchable by an inlet switching signal (S5) and provides a third pilot-control pressure (pS3), and the outlet pilot-control valve (26) is switchable by an outlet switching signal (S6) and provides a fourth pilot-control pressure (pS4), wherein preferably the inlet switching signal (S5) and the outlet switching signal (S6) are provided by a service control unit (110).

14. Redundancy valve assembly (1) according to claim 13, wherein the first pilot-control pressure (pS1) and the third pilot-control pressure (pS3) can be adjusted via a first shuttle valve (28) on the main valve unit (12), and wherein the second pilot-control pressure (pS2) and the fourth pilot-control pressure (pS4) can be adjusted via a second shuttle valve (30) on the main valve unit (12).

15. Redundancy valve assembly (1) according to any of the preceding claims, comprising a pressure sensor (32) for detecting a pressure (p1, p2) adjusted at the brake actuator connection (8).

16. Electronically controllable pneumatic brake system (204) for a vehicle (200), preferably a commercial vehicle (202), comprising
a service control unit (110) for controlling the electronically controllable pneumatic brake system (204) in an operating case,
at least one service axle modulator (112) which is connected to the service control unit (110) and receives service brake signals (SB) from the service control unit (110) and, on the basis thereof, adjusts a service brake pressure (p1) for a first axle (A1);
a redundancy control unit (140) for controlling the electronically controllable pneumatic brake system (204) in a redundancy case,
at least one redundancy axle modulator (142) which is connected to the redundancy control unit (140) and receives redundancy brake signals (SR) from the redundancy control unit (140) and, on the basis thereof, adjusts a redundancy brake pressure (p2) for the first axle (A1); and
at least one redundancy valve assembly (1) according to any of claims 1 to 15, wherein the service brake pressure connection (4) is connected to the service axle modulator (112) and receives the service brake pressure (p1) from the service axle modulator (112), and the redundancy brake pressure connection (6) is connected to the redundancy axle modulator (142) and receives the redundancy brake pressure (p2) from the redundancy axle modulator (142), and wherein the brake actuator connection (8) is connected to at least one first service brake actuator (207) on the first axle (A1).

17. Electronically controllable pneumatic brake system (204) according to claim 16, wherein the at least one redundancy valve assembly (1) is connected to the redundancy control unit (140) and receives therefrom the first switching signal (S1) and the second switching signal (S2).

18. Electronically controllable pneumatic brake system (204) according to claim 16 or claim 17, wherein the at least one redundancy valve assembly (1) is connected to the service control unit (110) and receives therefrom the third switching signal (S3) and the fourth switching signal (S4) and/or the inlet switching signal (S5) and the outlet switching signal (S6).

19. Electronically controllable pneumatic brake system (204) according to any of claims 16 to 18, comprising at least one first wheel speed sensor (209) on the first axle (A1), which first wheel speed sensor is connected to both the service control unit (110) and the redundancy control unit (140) and provides a first wheel speed signal (SD) to the service control unit (110) and the redundancy control unit (140).

20. Electronically controllable pneumatic brake system (204) according to claim 17 and claim 19, wherein the first switching signal (S1) and the second switching signal (S2) are generated and provided by the redundancy control unit (140) on the basis of the first wheel speed signal (SD).

21. Electronically controllable pneumatic brake system (204) according to any of claims 16 to 20, wherein the redundancy valve assembly (1) is arranged on the first service brake actuator (207) or installed adjacently to the first service brake actuator (207).

22. Electronically controllable pneumatic brake system (204) according to any of claims 16 to 21, wherein at least one redundancy valve assembly (1) according to any of claims 1 to 17 is provided on each axle of the vehicle (200), preferably on each service brake actuator (208a-208f).

23. Electronically controllable pneumatic brake system (204) according to any of claims 16 to 22, comprising
a second redundancy valve assembly (1b) according to any of claims 1 to 15, wherein the service brake pressure connection (4) of the second redundancy valve assembly (1b) is connected to the service axle modulator (112) and receives the service brake pressure (p1) from the service axle modulator (112), and the redundancy brake pressure connection (6) of the second redundancy valve assembly (1b) is connected to the redundancy axle modulator (142) and receives the redundancy brake pressure (p2) from the redundancy axle modulator (142), and wherein the brake actuator connection (8) of the second redundancy valve assembly (1b) is connected to at least one second service brake actuator (208b) on the first axle (A1).

24. Electronically controllable pneumatic brake system (204) according to any of claims 16 to 23, comprising
at least one second service axle modulator (114) which is connected to the service control unit (110) and receives service brake signals (SB) from the service control unit (110) and, on the basis thereof, adjusts a second service brake pressure (p3) for a second axle (A2);
at least one second redundancy axle modulator (144) which is connected to the redundancy control unit (140) and receives redundancy brake signals (SR) from the redundancy control unit (140) and, on the basis thereof, adjusts a second redundancy brake pressure (p4) for the second axle (A2); and
at least one third redundancy valve assembly (1c) according to any of claims 1 to 17, wherein the service brake pressure connection (4) of the third redundancy valve assembly (1c) is connected to the second service axle modulator (114) and receives the second service brake pressure (p3) from the second service axle modulator (114), and the redundancy brake pressure connection (6) of the third redundancy valve assembly (1c) is connected to the second redundancy axle modulator (144) and receives the second redundancy brake pressure (p4) from the second redundancy axle modulator (144), and wherein the brake actuator connection (8) of the third redundancy valve assembly (1c) is connected to at least one third service brake actuator (208c) on the second axle (A2).

25. Vehicle (200), preferably a commercial vehicle (202), comprising at least one first axle (A1) and one second axle (A2) and an electronically controllable pneumatic brake system (204) according to any of claims 16 to 24.

26. Method for controlling an electronically controllable pneumatic brake system (204) according to any of claims 16 to 24, comprising the following steps
in a service case of the electronically controllable pneumatic brake system (204),
adjusting a service brake pressure (p1) by a service brake pressure modulator (112) at a service brake pressure connection (4) of a redundancy valve assembly (1),
controlling the redundancy valve assembly (1) by a service control unit (110) on the basis of first wheel speed signals (SD) and thereby adjusting the service brake pressure (p1) at a brake actuator connection (8) of the redundancy valve assembly (1) in a slip-controlled manner; and
in a redundancy case (BZZ?) of the electronically controllable pneumatic brake system (204),
adjusting a redundancy brake pressure (p2) by a redundancy axle modulator (142) at a redundancy brake pressure connection (6) of the redundancy valve assembly (1),
controlling the redundancy valve assembly (1) by a redundancy control unit (140) on the basis of the first wheel speed signals (SD) and thereby adjusting the redundancy brake pressure (p2) at the brake actuator connection (8) in a slip-controlled manner.

## Revendications

1. Système de soupape à redondance (1) pour l'alimentation redondante d'une pression de freinage redondante (p2) dans un chemin de pression de freinage de service (40) d'un système de freinage pneumatique à commande électronique (204) pour un véhicule (200), de préférence un véhicule utilitaire (200), présentant :
un raccord de pression de freinage de service (4) pour la réception d'une pression de freinage de service (p1) d'un modulateur de pression de freinage de service (112) ;
un raccord de pression de freinage à redondance (6) pour la réception d'une pression de freinage à redondance (p2) d'un modulateur de pression de freinage à redondance (142) ; et
un raccord d'actionneur de freinage (8) pour le raccordement d'au moins un actionneur de freinage (207) ;
dans lequel le système de soupape à redondance (1) peut être commandé électriquement afin de commander sélectivement la pression de freinage de service (p1) ou la pression de freinage à redondance (p2) au niveau du raccord d'actionneur de freinage (8) ; et
une unité formant soupape électromagnétique (10) qui est raccordée au moins au raccord de pression de freinage de service (4) et au raccord de pression de freinage à redondance (6), et qui peut être commutée par au moins un premier signal de commutation (S1), dans lequel la pression de freinage de service (p1) ou la pression de freinage à redondance (p2) sont commandées au niveau du raccord d'actionneur de freinage (8) en fonction d'au moins le premier signal de commutation (S1), **caractérisé en ce que**
l'unité formant soupape électromagnétique (10) présente une soupape pilote de fonctionnement (14) électromagnétique et une soupape pilote à redondance (16) électromagnétique, dans lequel la soupape pilote de fonctionnement (14) peut être commutée par le premier signal de commutation (S1) et fournit une première pression pilote (pS1), et la soupape pilote à redondance (16) peut être commutée par un deuxième signal de commutation (S2) et fournit une deuxième pression pilote (pS2).

2. Système de soupape à redondance (1) selon la revendication 1, présentant une unité formant soupape principale (12) raccordée au raccord de pression de freinage de service (4), au raccord de pression de freinage à redondance (6) et au raccord d'actionneur de freinage (8) pour le blocage sélectif de la pression de freinage de service (p1) ou de la pression de freinage à redondance (p2).

3. Système de soupape à redondance (1) selon les revendications 1 et 2, dans lequel l'unité formant soupape principale (12) présente une soupape principale de fonctionnement (18) qui présente un premier raccord de soupape principale de fonctionnement (18.1) raccordé au raccord de pression de freinage de service (4) et un second raccord de soupape principale de fonctionnement (18.2) raccordé au raccord d'actionneur de freinage (8), dans lequel la soupape principale de fonctionnement (18) sépare, dans une position de blocage (18A), le premier raccord de soupape principale de fonctionnement (18.1) et le second raccord de soupape principale de fonctionnement (18.2) et raccorde par fluide sous pression, dans une position de passage (18B), le premier raccord de soupape principale de fonctionnement (18.1) au second raccord de soupape principale de fonctionnement (18.2).

4. Système de soupape à redondance (1) selon la revendication 1 et selon la revendication 2 ou 3, dans lequel l'unité formant soupape principale (12) présente une soupape principale à redondance (20) qui présente un premier raccord de soupape principale à redondance (20.1) raccordé au raccord de pression de freinage à redondance (6) et un second raccord de soupape principale à redondance (20.2) raccordée au raccord d'actionneur de freinage (8), dans lequel la soupape principale à redondance (20) sépare, dans une position de blocage (20A), le premier raccord de soupape principale à redondance (20.1) et le second raccord de soupape principale à redondance (20.2) et raccorde par fluide sous pression, dans une position de passage (20B), le premier raccord de soupape principale à redondance (20.1) au second raccord de soupape principale à redondance (20.2).

5. Système de soupape à redondance (1) selon les revendications 1 et 3, dans lequel la soupape principale de fonctionnement (18) peut être commutée pneumatiquement et présente un raccord de commande de fonctionnement (18.3) qui est raccordé à l'unité formant soupape électromagnétique (10) pour la réception de la première pression pilote (pS1), dans lequel la soupape principale de fonctionnement (18) est précontrainte par un ressort dans la position de blocage (18A).

6. Système de soupape à redondance (1) selon les revendications 1 et 4, dans lequel la soupape principale à redondance (20) peut être commutée pneumatiquement et présente un raccord de commande à redondance (20.3) qui est raccordé à l'unité formant soupape électromagnétique (10) pour la réception de la deuxième pression pilote (pS2), dans lequel la soupape principale à redondance (20) est précontrainte par un ressort dans la position de blocage (20A).

7. Système de soupape à redondance (1) selon la revendication 1, dans lequel le premier signal de commutation (S1) et le deuxième signal de commutation (S2) sont fournis par une unité de commande à redondance (140).

8. Système de soupape à redondance (1) selon l'une des revendications précédentes, dans lequel une soupape ABS (100) est montée en amont du raccord de pression de freinage de service (4), de sorte qu'une pression de freinage de service (p1) modulée par ABS est fournie au raccord de pression de freinage de service (4).

9. Système de soupape à redondance (1) selon l'une des revendications précédentes 1 à 7, dans lequel le système de soupape à redondance (1) est réalisé sous forme de soupape ABS (101) et est prévu pour commander la pression de freinage de service (p1) reçue au niveau du raccord de pression de freinage de service (4) en modulation ABS au niveau du raccord d'actionneur de freinage (8).

10. Système de soupape à redondance (1) selon l'une des revendications précédentes, comprenant une soupape rapide d'évacuation d'air (22) pour l'évacuation de la pression (p1, p2) commandée au niveau du raccord d'actionneur de freinage (8).

11. Système de soupape à redondance (1) selon la revendication 10, dans lequel la soupape rapide d'évacuation d'air (22) est raccordée au raccord de pression de freinage à redondance (6) de telle sorte que la pression de freinage à redondance (p2) peut être commandée et l'air du raccord d'actionneur de freinage (8) peut être évacué sélectivement par l'intermédiaire de la soupape rapide d'évacuation d'air (22), dans lequel la soupape rapide d'évacuation d'air (22) présente de préférence un premier raccord de soupape rapide d'évacuation d'air (22.1) raccordé au raccord de pression de freinage à redondance (6), un deuxième raccord de soupape rapide d'évacuation d'air (22.2) raccordé à l'unité formant soupape principale (12) et un troisième raccord de soupape rapide d'évacuation d'air (22.3) raccordé à un évent (3).

12. Système de soupape à redondance (1) selon la revendication 7, dans lequel la soupape pilote de fonctionnement (14) peut être commutée par un troisième signal de commutation (S3) et la soupape pilote à redondance (16) peut être commutée par un quatrième signal de commutation (S4), lesquels sont fournis par une unité de commande de fonctionnement (110).

13. Système de soupape à redondance (1) selon la revendication 1, dans lequel l'unité formant soupape électromagnétique (10) présente une soupape pilote d'entrée (24) électromagnétique et une soupape pilote de sortie (26) électromagnétique, dans lequel la soupape pilote d'entrée (24) peut être commutée par un signal de commutation d'entrée (S5) et fournit une troisième pression pilote (pS3), et la soupape pilote de sortie (26) peut être commutée par un signal de commutation de sortie (S6) et fournit une quatrième pression pilote (pS4), dans lequel le signal de commutation d'entrée (S5) et le signal de commutation de sortie (S6) sont de préférence fournis par une unité de commande de fonctionnement (110).

14. Système de soupape à redondance (1) selon la revendication 13, dans lequel la première pression pilote (pS1) et la troisième pression pilote (pS3) peuvent être commandées par l'intermédiaire d'une première soupape de commutation (28) sur l'unité formant soupape principale (12), et dans lequel la deuxième pression pilote (pS2) et la quatrième pression pilote (pS4) peuvent être commandées par l'intermédiaire d'une seconde soupape de commutation (30) sur l'unité formant soupape principale (12).

15. Système de soupape à redondance (1) selon l'une des revendications précédentes, présentant un capteur de pression (32) pour la détection d'une pression (p1, p2) commandée au niveau du raccord d'actionneur de freinage (8).

16. Système de freinage pneumatique pouvant être commandé électroniquement (204) pour un véhicule (200), de préférence un véhicule utilitaire (202), comportant
une unité de commande de fonctionnement (110) pour la commande du système de freinage pneumatique pouvant être commandé électroniquement (204) dans un cas de fonctionnement,
au moins un modulateur d'essieu de fonctionnement (112) qui est connecté à l'unité de commande de fonctionnement (110) et qui reçoit des signaux de freinage de service (SB) de l'unité de commande de fonctionnement (110) et qui, sur la base de ceux-ci, commande une pression de freinage de service (p1) pour un premier essieu (A1) ;
une unité de commande à redondance (140) pour la commande du système de freinage pneumatique pouvant être commandé électroniquement (204) dans un cas de redondance,
au moins un modulateur d'essieu à redondance (142) qui est connecté à l'unité de commande à redondance (140) et qui reçoit des signaux de freinage à redondance (SR) de l'unité de commande à redondance (140) et qui, sur la base de ceux-ci, commande une pression de freinage à redondance (p2) pour le premier essieu (A1) ; et
au moins un système de soupape à redondance (1) selon l'une des revendications 1 à 15, dans lequel le raccord de pression de freinage de service (4) est raccordé au modulateur d'essieu de fonctionnement (112) et reçoit la pression de freinage de service (p1) du modulateur d'essieu de fonctionnement (112), et le raccord de pression de freinage à redondance (6) est raccordé au modulateur d'essieu à redondance (142) et reçoit la pression de freinage à redondance (p2) du modulateur d'essieu à redondance (142), et dans lequel le raccord d'actionneur de freinage (8) est raccordé à au moins un premier actionneur de freinage de service (207) sur le premier essieu (A1).

17. Système de freinage pneumatique à commande électronique (204) selon la revendication 16, dans lequel l'au moins un système de soupape à redondance (1) est connecté à l'unité de commande à redondance (140) et reçoit le premier signal de commutation (S1) et le deuxième signal de commutation (S2) de celle-ci.

18. Système de freinage pneumatique à commande électronique (204) selon la revendication 16 ou 17, dans lequel l'au moins un système de soupape à redondance (1) est connecté à l'unité de commande de fonctionnement (110) et reçoit le troisième signal de commutation (S3) et le quatrième signal de commutation (S4) et/ou le signal de commutation d'entrée (S5) et le signal de commutation de sortie (S6) de celle-ci.

19. Système de freinage pneumatique à commande électronique (204) selon l'une des revendications 16 à 18, comprenant au moins un premier capteur de vitesse de rotation de roue (209) sur le premier essieu (A1), lequel premier capteur de vitesse de rotation de roue est connecté à la fois à l'unité de commande de fonctionnement (110) et à l'unité de commande à redondance (140) et fournit un premier signal de vitesse de rotation de roue (SD) à l'unité de commande de fonctionnement (110) et à l'unité de commande à redondance (140).

20. Système de freinage pneumatique à commande électronique (204) selon les revendications 17 et 19, dans lequel le premier signal de commutation (S1) et le deuxième signal de commutation (S2) sont générés et fournis par l'unité de commande à redondance (140) sur la base du premier signal de vitesse de rotation de roue (SD).

21. Système de freinage pneumatique à commande électronique (204) selon l'une des revendications 16 à 20, dans lequel le système de soupape à redondance (1) est disposé sur le premier actionneur de freinage de service (207) ou est monté de manière adjacente au premier actionneur de freinage de service (207).

22. Système de freinage pneumatique à commande électronique (204) selon l'une des revendications 16 à 21, dans lequel au moins un système de soupape à redondance (1) selon l'une des revendications 1 à 17 est prévu sur chaque essieu du véhicule (200), de préférence prévu sur chaque actionneur de freinage de service (208a-208f).

23. Système de freinage pneumatique à commande électronique (204) selon l'une des revendications 16 à 22, présentant
un deuxième système de soupape à redondance (1b) selon l'une des revendications 1 à 15, dans lequel le raccord de pression de freinage de service (4) du deuxième système de soupape à redondance (1b) est raccordé au modulateur d'essieu de fonctionnement (112) et reçoit la pression de freinage de service (p1) du modulateur d'essieu de fonctionnement (112), et le raccord de pression de freinage à redondance (6) du deuxième système de soupape à redondance (1b) est raccordé au modulateur d'essieu à redondance (142) et reçoit la pression de freinage à redondance (p2) du modulateur d'essieu à redondance (142), et dans lequel le raccord d'actionneur de freinage (8) du deuxième système de soupape à redondance (1b) est raccordé à au moins un deuxième actionneur de freinage de service (208b) sur le premier essieu (A1).

24. Système de freinage pneumatique à commande électronique (204) selon l'une des revendications 16 à 23, présentant
au moins un second modulateur d'essieu de fonctionnement (114) qui est connecté à l'unité de commande de fonctionnement (110) et qui reçoit des signaux de freinage de service (SB) de l'unité de commande de fonctionnement (110) et qui, sur la base de ceux-ci, commande une seconde pression de freinage de service (p3) pour un second essieu (A2) ;
au moins un second modulateur d'essieu à redondance (144) qui est connecté à l'unité de commande à redondance (140) et qui reçoit des signaux de freinage à redondance (SR) de l'unité de commande à redondance (140) et qui, sur la base de ceux-ci, commande une seconde pression de freinage à redondance (p4) pour le second essieu (A2) ; et
au moins un troisième système de soupape à redondance (1c) selon l'une des revendications 1 à 17, dans lequel le raccord de pression de freinage de service (4) du troisième système de soupape à redondance (1c) est raccordé au second modulateur d'essieu de fonctionnement (114) et reçoit la seconde pression de freinage de service (p3) du second modulateur d'essieu de fonctionnement (114), et le raccord de pression de freinage à redondance (6) du troisième système de soupape à redondance (1c) est raccordé au second modulateur d'essieu à redondance (144) et reçoit la seconde pression de freinage à redondance (p4) du second modulateur d'essieu à redondance (144), et dans lequel le raccord d'actionneur de freinage (8) du troisième système de soupape à redondance (1c) est raccordé à au moins un troisième actionneur de freinage de service (208c) sur le second essieu (A2).

25. Véhicule (200), de préférence véhicule utilitaire (202), comprenant au moins un premier essieu (A1) et un second essieu (A2) ainsi qu'un système de freinage pneumatique à commande électronique (204) selon l'une des revendications 16 à 24.

26. Procédé pour la commande d'un système de freinage pneumatique pouvant être commandé électroniquement (204) selon l'une des revendications 16 à 24, comprenant les étapes consistant à,
dans un cas de fonctionnement du système de freinage pneumatique à commande électronique (204),
commander une pression de freinage de service (p1) par un modulateur de pression de freinage de service (112) au niveau d'un raccord de pression de freinage de service (4) d'un système de soupape à redondance (1),
commander le système de soupape à redondance (1) par une unité de commande de fonctionnement (110) sur la base de premiers signaux de vitesse de rotation de roue (SD) et commander ainsi par régulation en glissement la pression de freinage de service (p1) au niveau d'un raccord d'actionneur de freinage (8) du système de soupape à redondance (1) ; et
dans un cas de redondance (BZZ?) du système de freinage pneumatique à commande électronique (204),
commander une pression de freinage à redondance (p2) par un modulateur d'essieu à redondance (142) au niveau d'un raccord de pression de freinage à redondance (6) du système de soupape à redondance (1),
commander le système de soupape à redondance (1) par une unité de commande à redondance (140) sur la base des premiers signaux de vitesse de rotation de roue (SD) et commander ainsi par régulation en glissement la pression de freinage à redondance (p2) au niveau du raccord d'actionneur de freinage (8).
